# EUROPEAN PATENT SPECIFICATION

(11) **EP 4 362 512 B1**
(45) Date of publication and mention of the grant of the patent: **29.10.2025**
(21) Application number: 22841221.9
(22) Date of filing: 05.07.2022
(51) Int. Cl.: H04L 61/4511

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 16.07.2021 CN 202110810737
(43) Date of publication of application: 01.05.2024
(73) Proprietor: Huawei Technologies Co., Ltd., Shenzhen, Guangdong 518129 (CN)
(72) Inventor: CHEN, Zehao, Shenzhen, Guangdong 518129 (CN); LI, Yongcui, Shenzhen, Guangdong 518129 (CN); NI, Hui, Shenzhen, Guangdong 518129 (CN)
(74) Representative: Maiwald GmbH
(86) International application number: PCT/CN2022/103818
(87) International publication number: WO 2023/284584

(56) References cited:
- WO-A1-2021/091232
- WO-A1-2021/138804
- CN-A- 109 981 316
- CN-A- 113 068 232
- CN-A- 113 115 480
- CN-A- 113 691 969
- US-A1- 2023 086 304
- LENOVO ET AL: "SMF selecting an EAS application server by taking into account NWDAF analytics", vol. SA WG2, no. eMeeting; 20210517 - 20210528, 1 June 2021 (2021-06-01), XP052021980, Retrieved from the Internet <URL:https://ftp.3gpp.org/tsg_sa/WG2_Arch/TSGS2_145E_Electronic_2021-05/Docs/S2-2105040.zip S2-2105040_rev4614r03_NWDAF_analytics_EAS_selection.doc> [retrieved on 20210601]
- ZTE: "KI#1 EAS Discovery Procedure with EASDF", vol. SA WG2, no. e-meeting; 20210412 - 20210416, 6 April 2021 (2021-04-06), XP051994260, Retrieved from the Internet <URL:https://ftp.3gpp.org/tsg_sa/WG2_Arch/TSGS2_144E_Electronic/Docs/S2-2102902.zip S2-2102902 Edge KI#1 local breakout.docx> [retrieved on 20210406]
- VIVO: "Solution for the KI#4: Discovery of the same EAS for collections of UEs", vol. SA WG2, no. Elbonia; 20220406 - 20220412, 29 March 2022 (2022-03-29), XP052133310, Retrieved from the Internet <URL:https://ftp.3gpp.org/tsg_sa/WG2_Arch/TSGS2_150E_Electronic_2022-04/Docs/S2-2202473.zip S2-2202473 - Solution for the KI#4 Discovery of the same EAS for collections of UEs.doc> [retrieved on 20220329]
- CHINA MOBILE: "DNS message transfer between EASDF and DNS server (located in DN) through PSA UPF", 3GPP DRAFT; S2-2104044, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Electronic meeting; 20210517 - 20210528, 10 May 2021 (2021-05-10), Mobile Competence Centre ; 650, route des Lucioles ; F-06921 Sophia-Antipolis Cedex ; France , XP052004378
- ERICSSON: "All DNS handling in EASDF provided by SMF", 3GPP DRAFT; S2-2103858, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Electronic meeting ;20210517 - 20210528, 10 May 2021 (2021-05-10), Mobile Competence Centre ; 650, route des Lucioles ; F-06921 Sophia-Antipolis Cedex ; France , XP052004202

## Description

### TECHNICAL FIELD

This application relates to the communication field, and specifically, to a communication method and apparatus.

### BACKGROUND

The standard TS 23.548 of the 3rd generation partnership project (3rd generation partnership project, 3GPP) defines a new network element that assists in discovering an edge application server (edge application server, EAS), namely, an edge application server discovery function (edge application server discovery function, EASDF). A main function of the EASDF is to process a domain name system (domain name system, DNS) message based on an indication of a session management function (session management function, SMF).

In a procedure of discovering the EAS by using the EASDF, the SMF may send, to the EASDF, a DNS information handling rule and an EDNS client subnet option (which may also be referred to as an "ECS option" for short) at a protocol data unit (protocol data unit, PDU) session granularity. However, DNS information handling rules and ECS options that are sent in a large number of PDU sessions are the same, thereby resulting in repeated sending of information. In addition, when the DNS information handling rules need to be updated, the SMF updates a DNS information handling rule of each PDU session, thereby causing sending of a large amount of signaling.

LENOVO ET AL: "SMF selecting an EAS application server by taking into account NWDAF analytics", 3GPP DRAFT; 82-2105040, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. eMeeting; 20210517 - 20210528 1 June 2021 (2021-06-01 ), XP052021980, describes an SMF selecting an EAS application server by taking into account NWDAF analytics. CN 113 115 480 A describes a method including receiving, by a session management function (SMF), a first identifier transmitted by user equipment (UE) in a protocol data unit (PDU) session establishment process (320); selecting a first edge application server discovery function (EASDF) for the UE according to the first identifier (340); and transmitting address information of the first EASDF to the UE (360). ZTE: "KI#1 EAS Discovery Procedure with EASDF", 3GPP DRAFT; 82-2102902, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e-meeting; 20210412 - 20210416 6 April 2021 (2021-04-06), XP051994260, describes an EAS discovery procedure with EASDF.

### SUMMARY

The invention is defined by the independent claims. Further embodiments are defined in the dependent claims. This application provides a communication method and apparatus. An SMF sends, to an EASDF, a correspondence between identification information of domain name system DNS handling information and the DNS handling information, to improve information processing efficiency and service experience of a user.

According to a first aspect, a communication method is provided. The method includes: A session management function SMF obtains at least one group of first association relationships, where the first association relationship is a correspondence between identification information of domain name system DNS handling information and the DNS handling information; the SMF sends, to an edge application server discovery function EASDF, the at least one group of first association relationships used for protocol data unit PDU sessions of a plurality of terminal devices; and the SMF sends, to the EASDF, a first message corresponding to a first PDU session, where the first message includes first identification information, the first identification information is identification information of DNS handling information corresponding to the first PDU session, and the first identification information is used by the EASDF to determine, based on the first identification information and the first association relationship, the DNS handling information corresponding to the first PDU session.

It should be noted that a first identifier in this application may be the DNS handling information corresponding to first UE or the first PDU session. In this application, the first identifier may be one of the following: a UE group ID, a rule (rule) ID, a DNAI, a DNN, S-NSSAI, or the like. For ease of description, this embodiment is described by using only an example in which the first identifier is a rule ID. The rule ID mentioned in the following embodiments may be any one of the foregoing first identifiers. This is not limited.

This is because differentiation granularities are different in different deployment scenarios. For example, in some scenarios, different UEs correspond to different first association relationships (in this case, a UE group ID may be used as identification information). In other scenarios, different PDU sessions correspond to different first association relationships (in this case, a rule ID may be used as identification information).

According to the technical solutions provided in this application, the EASDF sends, to the SMF, a correspondence between identification information of domain name system DNS handling information and the DNS handling information. In this way, the SMF sends, to the EASDF, a DNS handling rule that is based on the identification information of the DNS handling information, so that the EASDF may use different DNS handling information for different PDU sessions or UEs. This implements differentiated handling of DNS messages, and improves service experience of a user. In addition, repeated requesting and sending of information can be avoided, signaling interaction can be reduced, and information processing efficiency can be improved.

It should be noted that "a plurality of terminal devices" in this application may refer to a plurality of or all terminal devices to which the first association relationships are applicable, and the plurality of PDU sessions may be understood as a plurality of or all PDU sessions to which the first association relationships are applicable. Details are not described below again.

With reference to the first aspect, in some implementations of the first aspect, the DNS handling information includes DNS detection information or a DNS handling parameter; the DNS detection information is used by the EASDF to match a DNS message to determine a handling action for the DNS message; and the DNS handling parameter is used by the EASDF to match a DNS message to determine an EDNS client subnet option, so that the EASDF adds the EDNS client subnet option to the DNS message and sends the DNS message to a DNS server; or the DNS handling parameter is used by the EASDF to match a DNS message to determine a local DNS server address, and the EASDF sends the local DNS server address to a local DNS server. The DNS message is received by the EASDF from a terminal device or a DNS server.

In this application, "the DNS detection information is used by the EASDF to match a DNS message to determine a handling action for the DNS message" may alternatively mean that the DNS detection information is used by the EASDF to determine a DNS message handling action corresponding to the DNS message.

It should be noted that in this application, the DNS handling information may alternatively be the DNS detection information and the DNS handling parameter. Details are not described below again.

Based on the foregoing technical solution, a handling parameter in this application may be the DNS detection information or the DNS handling parameter, so that the EASDF may determine, based on detection information, a handling action for the DNS message. This avoids repeated requesting and sending of information. In addition, the EASDF may determine the ECS option or the local DNS server address based on the DNS handling parameter. This avoids repeated requesting and sending of information, reduces signaling interaction, and improves information processing efficiency.

With reference to the first aspect, in some implementations of the first aspect, if the DNS handling information is the DNS detection information, the DNS detection information includes a fully qualified domain name FQDN range and/or an edge application server internet protocol address range.

Based on the foregoing technical solution, in this application, the DNS detection information may include the FQDN range and/or the EAS IP address range, so that the EASDF may perform matching based on an FQDN range and/or an EAS IP address range that are/is in the DNS message, to determine whether to report the DNS message. In this way, the SMF sends, to the EASDF, a DNS handling rule that is based on the identification information of the DNS handling information, so that the EASDF may use different DNS handling information for different PDU sessions or UEs. This implements differentiated handling of DNS messages, and improves service experience of a user.

With reference to the first aspect, in some implementations of the first aspect, the DNS detection information further includes information that is about a DNS message handling action performed by the EASDF and that is determined based on the first identification information, and the handling action includes one or more of the following types: reporting the DNS message, reporting content in the DNS message, caching the DNS message, and forwarding the DNS message.

Based on the foregoing technical solution, in this application, the DNS detection information may further include the information about the DNS message handling action performed by the EASDF, so that the EASDF may determine, based on the detection information, the information about the DNS message handling action. This improves information processing efficiency.

With reference to the first aspect, in some implementations of the first aspect, if the DNS handling information is the DNS handling parameter, the DNS handling parameter is a correspondence between data network access identifier DNAI information and the EDNS client subnet option, or the DNS handling parameter is a correspondence between data network access identifier DNAI information, and a fully qualified domain name FQDN and the EDNS client subnet option, or the DNS handling parameter is a correspondence between data network access identifier DNAI information and the local DNS server address, or the DNS handling parameter is a correspondence between data network access identifier DNAI information, and a fully qualified domain name FQDN and the local DNS server address, where the DNS handling parameter is determined by the SMF based on deployment information of an edge application server and deployment information of a user plane function.

Based on the foregoing technical solution, in this application, the EASDF may determine the ECS option or the local DNS server based on the DNS handling parameter. This avoids repeated requesting and sending of information, reduces signaling interaction, and improves information processing efficiency.

With reference to the first aspect, in some implementations of the first aspect, if the identification information of the DNS handling information is a data network access identifier DNAI, the DNS handling information is the DNS handling parameter, and the DNS handling parameter is the EDNS client subnet option, the first identification information is a first DNAI, and the first identification information is used by the EASDF to match the first association relationship to determine the EDNS client subnet option, so that the EASDF adds the EDNS client subnet option to the DNS message and sends the DNS message to a DNS server, where the first DNAI is DNAI associated with a location of a terminal device, the DNS message is received by the EASDF from the terminal device, and the DNS handling parameter is determined by the SMF based on deployment information of an edge application server and deployment information of a user plane function.

With reference to the first aspect, in some implementations of the first aspect, if the identification information of the DNS handling information is a data network access identifier DNAI, the DNS handling information is the DNS handling parameter, and the DNS handling parameter is a correspondence between a fully qualified domain name FQDN and the EDNS client subnet option, the first identification information is a first DNAI, and the first identification information and the DNS message are used by the EASDF to match the first association relationship to determine the EDNS client subnet option, so that the EASDF adds the EDNS client subnet option to the DNS message and sends the DNS message to a DNS server, where the first DNAI is a DNAI associated with a location of a terminal device, the DNS message is received by the EASDF from the terminal device, the DNS message includes the FQDN, and the DNS handling parameter is determined by the SMF based on deployment information of an edge application server and deployment information of a user plane function.

Based on the foregoing technical solutions, in this application, specifically, when the identification information of the DNS handling information is the data network access identifier DNAI, the DNS handling parameter may be the EDNS client subnet option, or the DNS handling parameter may be the correspondence between the FQDN and the EDNS client subnet option. Therefore, the EASDF may determine the ECS option based on the DNS handling parameter. This avoids repeated requesting and sending of information, reduces signaling interaction, and improves information processing efficiency.

With reference to the first aspect, in some implementations of the first aspect, if the identification information of the DNS handling information is a data network access identifier, the DNS handling information is the DNS handling parameter, and the DNS handling parameter is the local DNS server address, the first identification information is a first DNAI, the first identification information is used by the EASDF to match the first association relationship to determine the local DNS server address, and the EASDF sends the DNS message to a local DNS server, where the first DNAI is a DNAI associated with a location of a terminal device, the DNS message is received by the EASDF from the terminal device, and the DNS handling parameter is determined by the SMF based on deployment information of an edge application server and deployment information of a user plane function.

With reference to the first aspect, in some implementations of the first aspect, if the identification information of the DNS handling information is a data network access identifier DNAI, the DNS handling information is the DNS handling parameter, and the DNS handling parameter is a correspondence between an FQDN and the local DNS server address, the first identification information is a first DNAI, the first identification information and the DNS message are used by the EASDF to match the first association relationship to determine the local DNS server address, and the EASDF sends the DNS message to a local DNS server, where the first DNAI is a DNAI associated with a location of a terminal device, the DNS message is received by the EASDF from the terminal device, the DNS message includes the FQDN, and the DNS handling parameter is determined by the SMF based on deployment information of an edge application server and deployment information of a user plane function.

Based on the foregoing technical solutions, in this application, specifically, when the identification information of the DNS handling information is the data network access identifier DNAI, the DNS handling parameter may be the local DNS server address or the correspondence between the FQDN and the local DNS server address. Therefore, the EASDF may determine the local DNS server address based on the DNS handling parameter. This avoids repeated requesting and sending of information, reduces signaling interaction, and improves information processing efficiency.

With reference to the first aspect, in some implementations of the first aspect, the deployment information of the edge application server includes one or more of the following types: information about an FQDN corresponding to a DNAI, information about an internet protocol address of the edge application server, and identification information of a DNS server; and the deployment information of the user plane function includes a correspondence between the user plane function UPF and the DNAI.

With reference to the first aspect, in some implementations of the first aspect, the first message further includes first indication information, where the first indication information indicates the EASDF to determine, based on the first identification information and the first association relationship, the DNS handling information corresponding to the first PDU session.

Based on the foregoing technical solution, in this application, the first message may further include the first indication information, and an indication of the indication information may enable the EASDF to determine, based on the first identification information and the first association relationship, the DNS handling information corresponding to the first PDU session. This improves information processing efficiency.

According to a second aspect, a communication method is provided. The method includes: An edge application server discovery function EASDF receives, from a session management function SMF, at least one group of first association relationships used for protocol data unit PDU sessions of a plurality of terminal devices, where the first association relationship is a correspondence between identification information of domain name system DNS handling information and the DNS handling information; the EASDF receives, from the SMF, a first message corresponding to a first PDU session, where the first message includes first identification information, the first identification information is identification information of DNS handling information corresponding to the first PDU session; and the EASDF determines, based on the first identification information and the first association relationship, the DNS handling information corresponding to the first PDU session.

According to the technical solution provided in this application, the EASDF may receive the first message and the correspondence between the identification information of the domain name system DNS handling information and the DNS handling information, and determine, based on the first identification information and the first association relationship, the DNS handling information corresponding to the first PDU session. In one aspect, the SMF sends, to the EASDF, a DNS handling rule that is based on the identification information of the DNS handling information. In this way, the EASDF may use different DNS handling information for different PDU sessions or UEs. This implements differentiated handling of DNS messages, and improves service experience of a user. In addition, the EASDF may determine an ECS option and a local server address based on a DNS handling parameter. This avoids repeated requesting and sending of information, reduces signaling interaction, and improves information processing efficiency.

With reference to the second aspect, in some implementations of the second aspect, the DNS handling information includes DNS detection information or a DNS handling parameter; the DNS detection information includes a fully qualified domain name FQDN range and/or an edge application server internet protocol address range; and the DNS handling parameter is a correspondence between data network access identifier DNAI information and the EDNS client subnet option; the DNS handling parameter is a correspondence between data network access identifier DNAI information, and a fully qualified domain name FQDN and the EDNS client subnet option; the DNS handling parameter is a correspondence between data network access identifier DNAI information and the local DNS server address; or the DNS handling parameter is a correspondence between data network access identifier DNAI information, and a fully qualified domain name FQDN and the local DNS server address.

Based on the foregoing technical solution, a handling parameter in this application may be the DNS detection information or the DNS handling parameter, so that the EASDF may determine, based on detection information, a handling action for the DNS message. This avoids repeated requesting and sending of information. In addition, the EASDF may determine the ECS option or the local DNS server address based on the DNS handling parameter. This avoids repeated requesting and sending of information, reduces signaling interaction, and improves information processing efficiency.

With reference to the second aspect, in some implementations of the second aspect, if the DNS handling information is the DNS detection information, the method further includes: The EASDF receives the DNS message; the EASDF matches the DNS message based on the first identification information and the first association relationship; and the EASDF determines the handling action for the DNS message.

In this application, the EASDF may further determine, based on the first identification information and the first association relationship, the handling action for the DNS message. Specifically, the EASDF matches the DNS message based on the first identification information and the first association relationship, and the EASDF determines the handling action for the DNS message.

In this application, the EASDF may further determine, based on the first identification information and the first association relationship, the handling action for the DNS message. This avoids repeated requesting and sending of information.

With reference to the second aspect, in some implementations of the second aspect, the DNS detection information further includes information that is about a DNS message handling action performed by the EASDF and that is determined based on the first identification information, and the handling action includes one or more of the following types: reporting the DNS message, reporting content in the DNS message, caching the DNS message, and forwarding the DNS message.

Based on the foregoing technical solution, in this application, the DNS detection information may further include the information about the DNS message handling action performed by the EASDF, so that the EASDF may determine, based on the detection information, the information about the DNS message handling action. This improves information processing efficiency.

With reference to the second aspect, in some implementations of the second aspect, if the DNS handling information is the DNS handling parameter, and the DNS handling parameter is a correspondence between data network access identifier DNAI information and the EDNS client subnet option, the method further includes: The EASDF receives the DNS message; the EASDF matches the DNS message based on the first identification information and the first association relationship; the EASDF determines the EDNS client subnet option by matching the DNS message; and the EASDF adds the determined EDNS client subnet option to the DNS message, and sends the DNS message to a DNS server.

With reference to the second aspect, in some implementations of the second aspect, if the DNS handling information is the DNS handling parameter, and the DNS handling parameter is a correspondence between data network access identifier DNAI information, and a fully qualified domain name FQDN and the EDNS client subnet option, the method further includes: The EASDF receives the DNS message; the EASDF matches the DNS message based on the first identification information and the first association relationship; the EASDF determines the EDNS client subnet option by matching the DNS message; and the EASDF adds the determined EDNS client subnet option to the DNS message, and sends the DNS message to a DNS server.

With reference to the second aspect, in some implementations of the second aspect, if the DNS handling information is the DNS handling parameter, and the DNS handling parameter is a correspondence between data network access identifier DNAI information and the local DNS server address, the method further includes: The EASDF receives the DNS message; the EASDF matches the DNS message based on the first identification information and the first association relationship; the EASDF determines the local DNS server address by matching the DNS message; and the EASDF sends the DNS message to a local DNS server.

With reference to the second aspect, in some implementations of the second aspect, if the DNS handling information is the DNS handling parameter, and the DNS handling parameter is a correspondence between data network access identifier DNAI information, and a fully qualified domain name FQDN and the local DNS server address, the method further includes: The EASDF receives the DNS message; the EASDF matches the DNS message based on the first identification information and the first association relationship; the EASDF determines the local DNS server address by matching the DNS message; and the EASDF sends the DNS message to a local DNS server.

Based on the foregoing technical solution, in this application, the EASDF may determine the ECS option or the local DNS server based on the DNS handling parameter. This avoids repeated requesting and sending of information, reduces signaling interaction, and improves information processing efficiency.

With reference to the second aspect, in some implementations of the second aspect, if the identification information of the DNS handling information is the data network access identifier DNAI, the DNS handling information is the DNS handling parameter, the DNS handling parameter is the EDNS client subnet option, and the first identification information is a first DNAI, the method further includes: The EASDF receives the DNS message from a terminal device; the EASDF matches the first association relationship based on the first identification information; the EASDF determines the EDNS client subnet option by matching the first association relationship; and the EASDF adds the determined EDNS client subnet option to the DNS message, and sends the DNS message to a DNS server, where the first DNAI is a DNAI associated with a location of the terminal device.

With reference to the second aspect, in some implementations of the second aspect, if the identification information of the DNS handling information is the data network access identifier DNAI, the DNS handling information is the DNS handling parameter, the DNS handling parameter is a correspondence between a fully qualified domain name FQDN and the EDNS client subnet option, and the first identification information is a first DNAI, the method further includes: The EASDF receives the DNS message from a terminal device; the EASDF matches the first association relationship based on the first identification information and the DNS message; the EASDF determines the EDNS client subnet option by matching the first association relationship; and the EASDF adds the determined EDNS client subnet option to the DNS message, and sends the DNS message to a DNS server.

Based on the foregoing technical solutions, in this application, specifically, when the identification information of the DNS handling information is the data network access identifier DNAI, the DNS handling parameter may be the EDNS client subnet option, or the DNS handling parameter may be the correspondence between the FQDN and the EDNS client subnet option. Therefore, the EASDF may determine the ECS option based on the DNS handling parameter. This avoids repeated requesting and sending of information, reduces signaling interaction, and improves information processing efficiency.

With reference to the second aspect, in some implementations of the second aspect, if the identification information of the DNS handling information is the data network access identifier, the DNS handling information is the DNS handling parameter, the DNS handling parameter is the local DNS server address, and the first identification information is a first DNAI, the method further includes: The EASDF receives a DNS message from a terminal device; the EASDF matches the first association relationship based on the first identification information; the EASDF determines the local DNS server address by matching the first association relationship; and the EASDF sends the DNS message to a local DNS server, where the first DNAI is a DNAI associated with a location of the terminal device.

With reference to the second aspect, in some implementations of the second aspect, if the identification information of the DNS handling information is the data network access identifier DNAI, the DNS handling information is the DNS handling parameter, and the DNS handling parameter is a correspondence between a fully qualified domain name FQDN and the DNS handling parameter, and the first identification information is a first DNAI, the method further includes: The EASDF receives the DNS message from a terminal device; the EASDF matches the first association relationship based on the first identification information and the DNS message; the EASDF determines the local DNS server address by matching the first association relationship; and the EASDF sends the DNS message to a local DNS server.

Based on the foregoing technical solutions, in this application, specifically, when the identification information of the DNS handling information is the data network access identifier DNAI, the DNS handling parameter may be the local DNS server address or the correspondence between the FQDN and the local DNS server address. Therefore, the EASDF may determine the local DNS server address based on the DNS handling parameter. This avoids repeated requesting and sending of information, reduces signaling interaction, and improves information processing efficiency.

With reference to the second aspect, in some implementations of the second aspect, the DNS handling parameter is determined by the SMF based on deployment information of an edge application server and deployment information of a user plane function; the deployment information of the edge application server includes one or more of the following types: information about an FQDN corresponding to a DNAI, information about an internet protocol address of the edge application server, and identification information of a DNS server; and the deployment information of the user plane function includes a correspondence between the user plane function UPF and the DNAI.

It should be noted that, in this application, the deployment information of the user plane function further includes a correspondence between the DNAI and the ECS option.

With reference to the first aspect, in some implementations of the first aspect, the first message further includes first indication information, where the first indication information indicates the EASDF to determine, based on the first identification information and the first association relationship, the DNS handling information corresponding to the first PDU session.

Based on the foregoing technical solution, in this application, the first message may further include the first indication information, and an indication of the indication information may enable the EASDF to determine, based on the first identification information and the first association relationship, the DNS handling information corresponding to the first PDU session. This improves information processing efficiency.

According to a third aspect, a communication method is provided. The method includes: A first network element obtains at least one group of second association relationships, where the second association relationship is a correspondence between device group identifier information and deployment information of an edge application server; and the first network element sends, to a session management function SMF, the at least one group of second association relationships.

With reference to the third aspect, in some implementations of the third method aspect, the deployment information of the edge application server includes one or more of the following types: information about a fully qualified domain name FQDN corresponding to a data network access identifier DNAI, information about an internet protocol address of the edge application server, and identification information of a domain name system DNS server.

With reference to the third aspect, in some implementations of the third method aspect, the first network element is a unified data repository UDR or a unified data management UDM.

Based on the foregoing technical solutions, in this application, the UDR or the UDM may send the at least one group of second association relationships to the SMF, so that the SMF may subsequently determine a first association relationship based on the second association relationships and UPF deployment information. This improves flexibility of information processing.

According to a fourth aspect, a communication system is provided. The system includes a session management function SMF and an edge application server discovery function EASDF. The SMF is configured to: obtain at least one group of first association relationships, where the first association relationship is a correspondence between identification information of domain name system DNS handling information and the DNS handling information; send, to the edge application server discovery function EASDF, the at least one group of first association relationships used for protocol data unit PDU sessions of a plurality of terminal devices; and send, to the EASDF, a first message corresponding to a first PDU session, where the first message includes first identification information, and the first identification information is identification information of DNS handling information corresponding to the first PDU session. The EASDF is configured to: receive the at least one group of first association relationships used for the PDU sessions of the plurality of terminal devices and the first message corresponding to the first PDU session, and determine, based on the first identification information and the first association relationship, the DNS handling information corresponding to the first PDU session.

According to the technical solution provided in this application, the SMF sends, to the EASDF, the first message and the correspondence between the identification information of the domain name system DNS handling information and the DNS handling information, so that the EASDF may receive the first message and the correspondence between the identification information of the domain name system DNS handling information and the DNS handling information, and the EASDF determines, based on the first identification information and the first association relationship, the DNS handling information corresponding to the first PDU session. In one aspect, the SMF sends, to the EASDF, a DNS handling rule that is based on the identification information of the DNS handling information. In this way, the EASDF may use different DNS handling information for different PDU sessions or UEs. This implements differentiated handling of DNS messages, and improves service experience of a user. In addition, the EASDF may determine an ECS option and a local server address based on a DNS handling parameter. This avoids repeated requesting and sending of information, reduces signaling interaction, and improves information processing efficiency.

With reference to the fourth aspect, in some implementations of the fourth aspect, the DNS handling information includes DNS detection information or a DNS handling parameter; the DNS detection information includes a fully qualified domain name FQDN range and/or an edge application server internet protocol address range; and the DNS handling parameter is a correspondence between data network access identifier DNAI information and the EDNS client subnet option; the DNS handling parameter is a correspondence between data network access identifier DNAI information, and a fully qualified domain name FQDN and the EDNS client subnet option; the DNS handling parameter is a correspondence between data network access identifier DNAI information and the local DNS server address; or the DNS handling parameter is a correspondence between data network access identifier DNAI information, and a fully qualified domain name FQDN and the local DNS server address.

With reference to the fourth aspect, in some implementations of the fourth aspect, if the DNS handling information is the DNS detection information, the EASDF is specifically configured to: receive the DNS message; match the DNS message based on the first identification information and the first association relationship; and determine a handling action for the DNS message.

With reference to the fourth aspect, in some implementations of the fourth aspect, the DNS detection information further includes information that is about a DNS message handling action performed by the EASDF and that is determined based on the first identification information, and the handling action includes one or more of the following types: reporting the DNS message, reporting content in the DNS message, caching the DNS message, and forwarding the DNS message.

With reference to the fourth aspect, in some implementations of the fourth aspect, if the DNS handling information is the DNS handling parameter, and the DNS handling parameter is the correspondence between the data network access identifier DNAI information and the EDNS client subnet option, the EASDF is specifically configured to: receive the DNS message; match the DNS message based on the first identification information and the first association relationship; determine the EDNS client subnet option by matching the DNS message; and add the determined EDNS client subnet option to the DNS message, and sends the DNS message to a DNS server.

With reference to the fourth aspect, in some implementations of the fourth aspect, if the DNS handling information is the DNS handling parameter, and the DNS handling parameter is the correspondence between the data network access identifier DNAI information, and the fully qualified domain name FQDN and the EDNS client subnet option, the EASDF is specifically configured to: receive the DNS message; match the DNS message based on the first identification information and the first association relationship; determine the EDNS client subnet option by matching the DNS message; and add the determined EDNS client subnet option to the DNS message, and sends the DNS message to a DNS server.

With reference to the fourth aspect, in some implementations of the fourth aspect, if the DNS handling information is the DNS handling parameter, and the DNS handling parameter is the correspondence between the data network access identifier DNAI information and the local DNS server address, the EASDF is specifically configured to: receive the DNS message; match the DNS message based on the first identification information and the first association relationship; determine the local DNS server address by matching the DNS message; and send the DNS message to a local DNS server.

With reference to the fourth aspect, in some implementations of the fourth aspect, if the DNS handling information is the DNS handling parameter, the DNS handling information is the DNS handling parameter, and the DNS handling parameter is the correspondence between the data network access identifier DNAI information, the fully qualified domain name FQDN, and the local DNS server address, the EASDF is specifically configured to: receive the DNS message; match the DNS message based on the first identification information and the first association relationship; determine the local DNS server address by matching the DNS message; and send the DNS message to a local DNS server.

With reference to the fourth aspect, in some implementations of the fourth aspect, the SMF is further configured to determine the DNS handling parameter based on deployment information of an edge application server and deployment information of a user plane function.

With reference to the fourth aspect, in some implementations of the fourth aspect, the deployment information of the edge application server includes one or more of the following types: information about an FQDN corresponding to a DNAI, information about an internet protocol address of the edge application server, and identification information of a DNS server; and the deployment information of the user plane function includes a correspondence between the user plane function UPF and the DNAI.

With reference to the fourth aspect, in some implementations of the fourth aspect, if the identification information of the DNS handling information is the data network access identifier DNAI, the DNS handling information is the DNS handling parameter, and the DNS handling parameter is the EDNS client subnet option, the first identification information is a first DNAI, and the EASDF is specifically configured to: receive the DNS message from a terminal device; match the first association relationship based on the first identification information; determine the EDNS client subnet option by matching the first association relationship; and add the determined EDNS client subnet option to the DNS message, and send the DNS message to a DNS server, where the first DNAI is a DNAI associated with a location of the terminal device.

With reference to the fourth aspect, in some implementations of the fourth aspect, if the identification information of the DNS handling information is the data network access identifier DNAI, the DNS handling information is the DNS handling parameter, and the DNS handling parameter is the correspondence between the fully qualified domain name FQDN and the EDNS client subnet option, the first identification information is a first DNAI, and the EASDF is specifically configured to: receive the DNS message from a terminal device; match the first association relationship based on the first identification information and the DNS message; determine the EDNS client subnet option by matching the first association relationship; and add the determined EDNS client subnet option to the DNS message, and send the DNS message to a DNS server, where the first DNAI is a DNAI associated with a location of the terminal device.

With reference to the fourth aspect, in some implementations of the fourth aspect, if the identification information of the DNS handling information is the data network access identifier, the DNS handling information is the DNS handling parameter, and the DNS handling parameter is the local DNS server address, the first identification information is a first DNAI, and the EASDF is specifically configured to: receive the DNS message from a terminal device; match the first association relationship based on the first identification information; determine the local DNS server address by matching the first association relationship; and send the DNS message to a local DNS server, where the first DNAI is a DNAI associated with a location of the terminal device.

With reference to the fourth aspect, in some implementations of the fourth aspect, if the identification information of the DNS handling information is the data network access identifier DNAI, the DNS handling information is the DNS handling parameter, and the DNS handling parameter is the correspondence between the fully qualified domain name FQDN and the DNS handling parameter, the first identification information is a first DNAI, and the EASDF is specifically configured to: receive the DNS message from a terminal device; match the first association relationship based on the first identification information and the DNS message; determine the local DNS server address by matching the first association relationship; and sends the DNS message to a local DNS server.

With reference to the fourth aspect, in some implementations of the fourth aspect, the system further includes a first network element, where the first network element is a unified data repository UDR or a unified data management UDM, and the first network element is configured to: obtain at least one group of second association relationships, where the second association relationship is a correspondence between device group identification information and deployment information of an edge application server; and send the second association relationships to the SMF. The SMF is configured to receive the at least one group of second association relationships.

With reference to the fourth aspect, in some implementations of the fourth aspect, the first message further includes first indication information, where the first indication information indicates the EASDF to determine, based on the first identification information and the first association relationship, the DNS handling information corresponding to the first PDU session.

According to a fifth aspect, an apparatus is provided. The apparatus may be an SMF. The apparatus may alternatively be a chip. The apparatus has a function of implementing the SMF in any possible implementation of the first aspect. The function may be implemented by hardware, or may be implemented by hardware executing corresponding software. The hardware or the software includes one or more modules or units corresponding to the foregoing functions.

The apparatus includes a transceiver unit and a processing unit. The processing unit is configured to obtain at least one group of first association relationships, where the first association relationship is a correspondence between identification information of domain name system DNS handling information and the DNS handling information. The transceiver unit is configured to send the at least one group of first association relationships used for protocol data unit PDU sessions of a plurality of terminal devices. The transceiver unit is configured to send a first message corresponding to a first PDU session, where the first message includes first identification information, the first identification information is identification information of DNS handling information corresponding to the first PDU session, and the first identification information is used by an EASDF to determine, based on the first identification information and the first association relationship, DNS handling information corresponding to the first PDU session.

With reference to the fifth aspect, in some implementations of the fifth aspect, the DNS handling information includes DNS detection information or a DNS handling parameter; the DNS detection information is used by the EASDF to match a DNS message to determine a handling action for the DNS message; and the DNS handling parameter is used by the EASDF to match a DNS message to determine an EDNS client subnet option, so that the EASDF adds the EDNS client subnet option to the DNS message and sends the DNS message to a DNS server; or the DNS handling parameter is used by the EASDF to match a DNS message to determine a local DNS server address, and send the EASDF sens the DNS message to a local DNS server, where the DNS message is received by the EASDF from a terminal device or a DNS server.

With reference to the fifth aspect, in some implementations of the fifth aspect, if the DNS handling information is the DNS detection information, the DNS detection information includes a fully qualified domain name FQDN range and/or an edge application server internet protocol address range.

With reference to the fifth aspect, in some implementations of the fifth aspect, the DNS detection information further includes information that is about a DNS message handling action performed by the EASDF and that is determined based on the first identification information, and the handling action includes one or more of the following types: reporting the DNS message, reporting content in the DNS message, caching the DNS message, and forwarding the DNS message.

With reference to the fifth aspect, in some implementations of the fifth aspect, if the DNS handling information is the DNS handling parameter, the DNS handling parameter is a correspondence between data network access identifier DNAI information and the EDNS client subnet option, or the DNS handling parameter is a correspondence between data network access identifier DNAI information, and a fully qualified domain name FQDN and the EDNS client subnet option, or the DNS handling parameter is a correspondence between data network access identifier DNAI information and the local DNS server address, or the DNS handling parameter is a correspondence between data network access identifier DNAI information, and a fully qualified domain name FQDN and the local DNS server address, where the DNS handling parameter is determined by the SMF based on deployment information of an edge application server and deployment information of a user plane function.

With reference to the fifth aspect, in some implementations of the fifth aspect, if the identification information of the DNS handling information is the data network access identifier DNAI, the DNS handling information is the DNS handling parameter, and the DNS handling parameter is the EDNS client subnet option, the first identification information is a first DNAI, and the first identification information is used by the EASDF to match the first association relationship to determine the EDNS client subnet option, so that the EASDF adds the EDNS client subnet option to a DNS message and sends the DNS message to a DNS server, where the first DNAI is DNAI associated with a location of a terminal device, the DNS message is received by the EASDF from the terminal device, and the DNS handling parameter is determined by the SMF based on deployment information of an edge application server and deployment information of a user plane function.

With reference to the fifth aspect, in some implementations of the fifth aspect, if the identification information of the DNS handling information is the data network access identifier DNAI, the DNS handling information is the DNS handling parameter, and the DNS handling parameter is a correspondence between a fully qualified domain name FQDN and the EDNS client subnet option, the first identification information is a first DNAI, and the first identification information and the DNS message are used by the EASDF to match the first association relationship to determine the EDNS client subnet option, so that the EASDF adds the EDNS client subnet option to the DNS message and sends the DNS message to a DNS server, where the first DNAI is a DNAI associated with a location of a terminal device, the DNS message is received by the EASDF from the terminal device, and the DNS handling parameter is determined by the SMF based on deployment information of an edge application server and deployment information of a user plane function.

With reference to the fifth aspect, in some implementations of the fifth aspect, if the identification information of the DNS handling information is the data network access identifier, the DNS handling information is the DNS handling parameter, and the DNS handling parameter is the local DNS server address, the first identification information is a first DNAI, the first identification information is used by the EASDF to match the first association relationship to determine the local DNS server address, and the EASDF sends the DNS message to a local DNS server, where the first DNAI is a DNAI associated with a location of a terminal device, the DNS message is received by the EASDF from the terminal device, and the DNS handling parameter is determined by the SMF based on deployment information of an edge application server and deployment information of a user plane function.

With reference to the fifth aspect, in some implementations of the fifth aspect, if the identification information of the DNS handling information is the data network access identifier DNAI, the DNS handling information is the DNS handling parameter, and the DNS handling parameter is a correspondence between a fully qualified domain name FQDN and the DNS handling parameter, the first identification information is a first DNAI, the first identification information and the DNS message are used by the EASDF to match the first association relationship to determine the local DNS server address, and the EASDF sends the DNS message to a local DNS server, where the first DNAI is a DNAI associated with a location of a terminal device, the DNS message is received by the EASDF from the terminal device, and the DNS handling parameter is determined by the SMF based on deployment information of an edge application server and deployment information of a user plane function.

With reference to the fifth aspect, in some implementations of the fifth aspect, the deployment information of the edge application server includes one or more of the following types: information about an FQDN corresponding to a DNAI, information about an internet protocol address of the edge application server, and identification information of a DNS server; and the deployment information of the user plane function includes a correspondence between the user plane function UPF and the DNAI.

With reference to the fifth aspect, in some implementations of the fifth aspect, the first message further includes first indication information, where the first indication information indicates the EASDF to determine, based on the first identification information and the first association relationship, the DNS handling information corresponding to the first PDU session.

According to a sixth aspect, a communication apparatus is provided, and the apparatus may be an EASDF. The apparatus may alternatively be a chip. The apparatus has a function of implementing the EASDF in any possible implementation of the second aspect. The function may be implemented by hardware, or may be implemented by hardware executing corresponding software. The hardware or the software includes one or more modules or units corresponding to the foregoing functions.

The apparatus includes a transceiver unit and a processing unit. The transceiver unit is configured to receive at least one group of first association relationships used for protocol data unit PDU sessions of a plurality of terminal devices, where the first association relationship is a correspondence between identification information of domain name system DNS handling information and the DNS handling information. The transceiver unit is configured to receive a first message, where the first message includes first identification information, the first identification information is identification information of DNS handling information corresponding to a first PDU session. The processing unit is configured to determine, based on the first identification information and the first association relationship, DNS handling information corresponding to the first PDU session.

With reference to the sixth aspect, in some implementations of the sixth aspect, the DNS handling information includes DNS detection information or a DNS handling parameter. The DNS detection information includes a fully qualified domain name FQDN range and/or an edge application server internet protocol address range; amd the DNS handling parameter is a correspondence between data network access identifier DNAI information and an EDNS client subnet option; the DNS handling parameter is a correspondence between data network access identifier DNAI information, and a fully qualified domain name FQDN and an EDNS client subnet option; the DNS handling parameter is a correspondence between data network access identifier DNAI information and a local DNS server address; or the DNS handling parameter is a correspondence between data network access identifier DNAI information, and a fully qualified domain name FQDN and a local DNS server address.

With reference to the sixth aspect, in some implementations of the sixth aspect, if the DNS handling information is the DNS detection information, the transceiver unit is configured to receive a DNS message; the processing unit is configured to match the DNS message based on the first identification information and the first association relationship; and the processing unit is configured to determine a handling action for the DNS message.

With reference to the sixth aspect, in some implementations of the sixth aspect, the DNS detection information further includes information that is about a DNS message handling action performed by the EASDF and that is determined based on the first identification information, and the handling action includes one or more of the following: reporting the DNS message, reporting content in the DNS message, caching the DNS message, and forwarding the DNS message.

With reference to the sixth aspect, in some implementations of the sixth aspect, if the DNS handling information is the DNS handling parameter, and the DNS handling parameter is a correspondence between data network access identifier DNAI information and the EDNS client subnet option, the transceiver unit is configured to receive the DNS message; the processing unit is configured to match the DNS message based on the first identification information and the first association relationship; the processing unit is configured to determine the EDNS client subnet option by matching the DNS message; and the processing unit is configured to add the determined EDNS client subnet option to the DNS message, and the transceiver unit is configured to send, to a DNS server, the DNS message to which the EDNS client subnet option is added.

With reference to the sixth aspect, in some implementations of the sixth aspect, if the DNS handling information is the DNS handling parameter, and the DNS handling parameter is a correspondence between data network access identifier DNAI information, and a fully qualified domain name FQDN and the EDNS client subnet option, the transceiver unit is configured to receive the DNS message; the processing unit is configured to match the DNS message based on the first identification information and the first association relationship; the processing unit is configured to determine the EDNS client subnet option by matching the DNS message; and the processing unit is configured to add the determined EDNS client subnet option to the DNS message, and the transceiver unit is configured to send, to a DNS server, the DNS message to which the EDNS client subnet option is added.

With reference to the sixth aspect, in some implementations of the sixth aspect, if the DNS handling information is the DNS handling parameter, and the DNS handling parameter is a correspondence between data network access identifier DNAI information and the local DNS server address, the transceiver unit is configured to receive the DNS message; the processing unit is configured to match the DNS message based on the first identification information and the first association relationship; the processing unit is configured to determine the local DNS server address by matching the DNS message; and the transceiver unit is configured to send the DNS message to a local DNS server.

With reference to the sixth aspect, in some implementations of the sixth aspect, if the DNS handling information is the DNS handling parameter, and the DNS handling parameter is a correspondence between data network access identifier DNAI information, and a fully qualified domain name FQDN and the local DNS server address, the transceiver unit is configured to receive the DNS message; the processing unit is configured to match the DNS message based on the first identification information and the first association relationship; the processing unit is configured to determine the local DNS server address by matching the DNS message; and the processing unit is configured to send the DNS message to a local DNS server.

With reference to the sixth aspect, in some implementations of the sixth aspect, if the identification information of the DNS handling information is the data network access identifier DNAI, the DNS handling information is the DNS handling parameter, and the DNS handling parameter is the EDNS client subnet option, the first identification information is a first DNAI, and the transceiver unit is configured to receive the DNS message from a terminal device; the processing unit is configured to match the first association relationship based on the first identification information; the processing unit is configured to determine the EDNS client subnet option by matching the first association relationship; and the processing unit is configured to add the determined EDNS client subnet option to the DNS message, and the transceiver unit is configured to send, to a DNS server, the DNS message to which the EDNS client subnet option is added, where the first DNAI is a DNAI associated with a location of the terminal device.

With reference to the sixth aspect, in some implementations of the sixth aspect, if the identification information of the DNS handling information is the data network access identifier DNAI, the DNS handling information is the DNS handling parameter, and the DNS handling parameter is a correspondence between a fully qualified domain name FQDN and the EDNS client subnet option, the first identification information is a first DNAI, and the transceiver unit is configured to receive the DNS message from a terminal device; the processing unit is configured to match the first association relationship based on the first identification information and the DNS message; the processing unit is configured to determine the EDNS client subnet option by matching the first association relationship; the processing unit is configured to: add the determined EDNS client subnet option to the DNS message, and send the DNS message to a DNS server; and the transceiver unit is configured to send, to a DNS server, the DNS message to which the EDNS client subnet option is added, where the first DNAI is a DNAI associated with a location of the terminal device.

With reference to the sixth aspect, in some implementations of the sixth aspect, if the identification information of the DNS handling information is the data network access identifier, the DNS handling information is the DNS handling parameter, and the DNS handling parameter is the local DNS server address, the first identification information is a first DNAI, and the transceiver unit is configured to receive the DNS message from a terminal device; the processing unit is configured to match the first association relationship based on the first identification information; the processing unit is configured to determine the local DNS server address by matching the first association relationship; and the processing unit is configured to send the DNS message to a local DNS server, where the first DNAI is a DNAI associated with a location of the terminal device.

With reference to the sixth aspect, in some implementations of the sixth aspect, if the identification information of the DNS handling information is a data network access identifier DNAI, the DNS handling information is the DNS handling parameter, and the DNS handling parameter is a correspondence between a fully qualified domain name FQDN and the DNS handling parameter, the first identification information is a first DNAI, and the transceiver unit is configured to receive the DNS message from a terminal device; the processing unit is configured to match the first association relationship based on the first identification information and the DNS message; the processing unit is configured to determine the local DNS server address by matching the first association relationship; and the processing unit is configured to send the DNS message to a local DNS server.

With reference to the sixth aspect, in some implementations of the sixth aspect, the DNS handling parameter is determined by the SMF based on deployment information of an edge application server and deployment information of a user plane function; the deployment information of the edge application server includes one or more of the following types: information about an FQDN corresponding to a DNAI, information about an internet protocol address of the edge application server, and identification information of a DNS server; and the deployment information of the user plane function includes a correspondence between the user plane function UPF and the DNAI.

With reference to the sixth aspect, in some implementations of the sixth aspect, the first message further includes first indication information, where the first indication information indicates the EASDF to determine, based on the first identification information and the first association relationship, the DNS handling information corresponding to the first PDU session.

According to a seventh aspect, a communication apparatus is provided. The apparatus may be a first network element, for example, a UDR or a UDM. The apparatus may alternatively be a chip. The apparatus has a function of implementing the first network element in any possible implementation of the third aspect. The function may be implemented by hardware, or may be implemented by hardware executing corresponding software. The hardware or the software includes one or more modules or units corresponding to the foregoing functions.

The apparatus includes a transceiver unit and a processing unit. The processing unit is configured to obtain at least one group of second association relationships, where the second association relationship is a correspondence between device group identification information and deployment information of an edge application server. The transceiver unit is configured to send the second association relationships.

With reference to the seventh aspect, in some implementations of the seventh aspect, the deployment information of the edge application server includes one or more of the following types: information about a fully qualified domain name FQDN corresponding to a data network access identifier DNAI, information about an internet protocol address of the edge application server, and identification information of a domain name system DNS server.

According to an eighth aspect, a communication apparatus is provided, and includes a processor. The processor is coupled to a memory, and may be configured to execute instructions in the memory, to implement a function of the SMF in any possible implementation of the first aspect. Optionally, the apparatus further includes the memory. Optionally, the apparatus further includes a communication interface, and the processor is coupled to the communication interface.

In an implementation, the apparatus is an SMF. When the apparatus is the SMF, the communication interface may be a transceiver or an input/output interface.

In another implementation, the apparatus is a chip configured in an SMF. When the apparatus is the chip configured in the SMF, the communication interface may be an input/output interface.

Optionally, the transceiver may be a transceiver circuit. Optionally, the input/output interface may be an input/output circuit.

According to a ninth aspect, a communication apparatus is provided, and includes a processor. The processor is coupled to a memory, and may be configured to execute instructions in the memory, to implement a function of the EASDF in any possible implementation of the second aspect. Optionally, the apparatus further includes the memory. Optionally, the apparatus further includes a communication interface, and the processor is coupled to the communication interface.

In an implementation, the apparatus is an EASDF. When the apparatus is the EASDF, the communication interface may be a transceiver or an input/output interface.

In another implementation, the apparatus is a chip configured in an EASDF. When the apparatus is the chip configured in the EASDF, the communication interface may be an input/output interface.

Optionally, the transceiver may be a transceiver circuit. Optionally, the input/output interface may be an input/output circuit.

According to a tenth aspect, a communication apparatus is provided, and includes a processor. The processor is coupled to a memory, and may be configured to execute instructions in the memory, to implement a function of the first network element in any possible implementation of the third aspect. For example, the apparatus may be a UDR or a UDM. Optionally, the apparatus further includes the memory. Optionally, the apparatus further includes a communication interface, and the processor is coupled to the communication interface.

In an implementation, the apparatus is a first network element. When the apparatus is the first network element, the communication interface may be a transceiver or an input/output interface.

In another implementation, the apparatus is a chip configured in a first network element. When the apparatus is the chip configured in the first network element, the communication interface may be an input/output interface.

Optionally, the transceiver may be a transceiver circuit. Optionally, the input/output interface may be an input/output circuit.

According to an eleventh aspect, a processor is provided, and includes an input circuit, an output circuit, and a processing circuit. The processing circuit is configured to: receive a signal via the input circuit, and transmit a signal via the output circuit, to enable the processor to perform the method in any one of the first aspect to the third aspect or the possible implementations of the first aspect to the third aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a twelfth aspect, an apparatus is provided, and includes a processor and a memory. The processor is configured to: read instructions stored in the memory, receive a signal by using a receiver, and transmit a signal by using a transmitter, to perform the method in any one of the first aspect to the third aspect or the possible implementations of the first aspect to the third aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process such as sending of indication information may be a process of outputting the indication information from the processor, and receiving of capability information may be a process of receiving input capability information by the processor. Specifically, data output by the processor may be output to a transmitter, and input data received by the processor may be from a receiver. The transmitter and the receiver may be collectively referred to as a transceiver.

The apparatus in the twelfth aspect may be a chip. The processor may be implemented by using hardware or software. When the processor is implemented by using hardware, the processor may be a logic circuit, an integrated circuit, or the like. Alternatively, when the processor is implemented by using software, the processor may be a general-purpose processor, and is implemented by reading software code stored in the memory. The memory may be integrated into the processor, or may exist independently outside the processor.

According to a thirteenth aspect, a computer program product is provided. The computer program product includes a computer program (which may also be referred to as code or instructions), and when the computer program is run, the computer is enabled to perform the method in any one of the first aspect to the third aspect or the possible implementations of the first aspect to the third aspect.

According to a fourteenth aspect, a computer-readable medium is provided. The computer-readable medium stores a computer program (which may also be referred to as code or instructions), and when the computer program runs on a computer, the computer is enabled to perform the method in any one of the first aspect to the third aspect or the possible implementations of the first aspect to the third aspect.

According to a fifteenth aspect, a chip system is provided, including a processor, configured to invoke a computer program from a memory and run the computer program, to enable a device installed with the chip system to perform the method in any one of the first aspect to the third aspect or the possible implementations of the first aspect to the third aspect.

According to a sixteenth aspect, a system is provided. The system includes the apparatus in the fifth aspect, the apparatus in the sixth aspect, and the apparatus in the seventh aspect.

### BRIEF DESCRIPTION OF DRAWINGS

FIG. 1 is a diagram of a system architecture to which an embodiment of this application is applicable;
FIG. 2 is a schematic flowchart of a communication method 200 according to this application;
FIG. 3A and FIG. 3B are a schematic flowchart of a communication method 300 according to this application;
FIG. 4A and FIG. 4B are a schematic flowchart of a communication method 400 according to this application;
FIG. 5 is a schematic flowchart of a communication method 500 according to this application;
FIG. 6 is a schematic block diagram of a communication apparatus 100 according to this application; and
FIG. 7 is a schematic block diagram of a communication apparatus 200 according to this application.

### DESCRIPTION OF EMBODIMENTS

The following describes technical solutions of this application with reference to accompanying drawings.

A wireless communication system mentioned in embodiments of this application includes but is not limited to a global system for mobile communications (global system for mobile communications, GSM) system, a long term evolution (long term evolution, LTE) frequency division duplex (frequency division duplex, FDD) system, an LTE time division duplex (time division duplex, TDD) system, an LTE system, a long term evolution-advanced (LTE-Advanced, LTE-A) system, a next-generation communication system (for example, a 6G communication system), a system integrating a plurality of access systems, or an evolved system.

The technical solutions provided in this application may be further applied to machine type communication (machine type communication, MTC), machine-to-machine communication long term evolution technology (Long Term Evolution-machine, LTE-M), a device-to-device (device to device, D2D) network, a machine-to-machine (machine to machine, M2M) network, an internet of things (internet of things, IoT) network, or another network. The IoT network may include, for example, an internet of vehicles. Communication manners in an internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

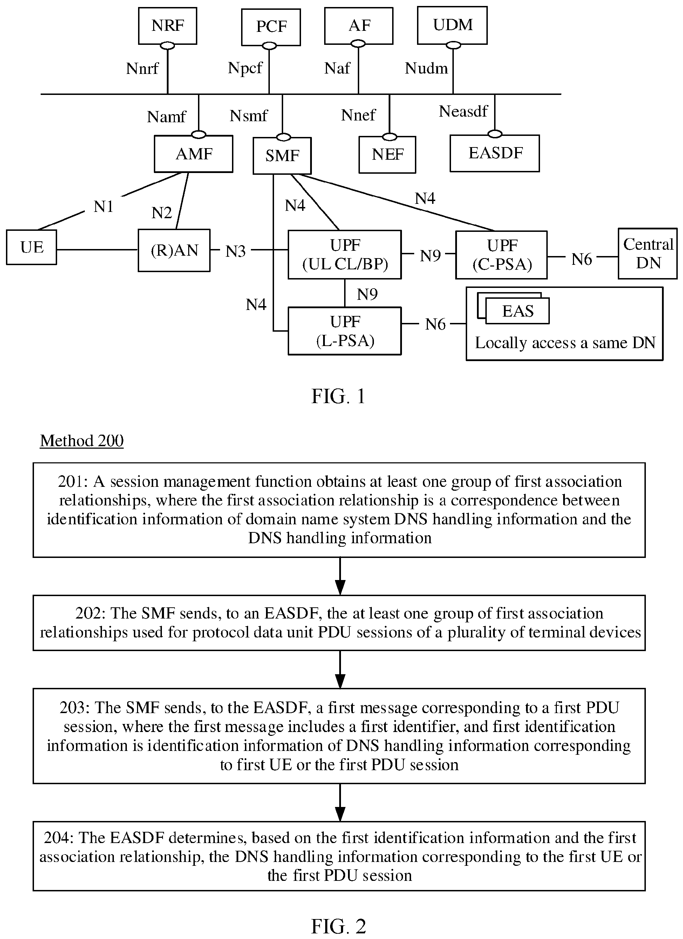

With reference to FIG. 1, the following describes in detail a network system architecture related to embodiments of this application.

FIG. 1 is a diagram of a system architecture to which an embodiment of this application is applicable. As shown in the figure, the network architecture may specifically include the following network elements.
1. Radio access network (radio access network, RAN): An access network that implements a network access function based on a wireless communication technology may be referred to as a radio access network. The radio access network can manage radio resources, provide an access service for a terminal, and further complete forwarding of a control signal and user data between the terminal and a core network.
   A radio access network device involved in this application may be a device with a wireless transceiver function. The radio access network device may be a device that provides a wireless communication function service, is usually located on a network side, and includes but is not limited to a next generation NodeB (gNodeB, gNB) in a 5th generation (5th generation, 5G) communication system, a next generation NodeB in a 6th generation (6th generation, 6G) mobile communication system, a base station in a future mobile communication system, an access node in a Wi-Fi system, an evolved NodeB (evolved NodeB, eNB) in an LTE system, a radio network controller (radio network controller, RNC), a NodeB (NodeB, NB), a base station controller (base station controller, BSC), a home NodeB (for example, a home evolved NodeB or a home NodeB, HNB), a baseband unit (base band unit, BBU), a transmission reception point (transmission reception point, TRP), a transmission point (transmitting point, TP), and a base transceiver station (base transceiver station, BTS). In a network structure, the access network device may include a central unit (central unit, CU) node, a distributed unit (distributed unit, DU) node, a RAN device including a CU node and a DU node, or a RAN device including a CU-control plane node, a CU-user plane node, and a DU node. The access network device may serve a cell, and user equipment communicates with a base station by using a transmission resource (for example, a frequency domain resource or a frequency spectrum resource) used by the cell. The cell may be a cell corresponding to the base station (for example, a base station). The cell may belong to a macro base station or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are applicable to a data transmission service that provides high speed. The radio access network device may be a macro base station, may be a micro base station or an indoor base station, or may be a relay node or a donor node, a device that provides a wireless communication service for user equipment in a V2X communication system, a radio controller in a cloud radio access network (cloud radio access network, CRAN) scenario, a relay station, a vehicle-mounted device, a wearable device, a network device in a future evolved network, or the like. A specific technology and a specific device form that are used by the radio access network device are not limited in embodiments of this application.
2. User equipment (user equipment, UE): UE in embodiments of this application may be a network terminal device, such as a mobile phone or an internet of things terminal device. Specifically, for example, a terminal device may be user equipment (user equipment, UE), for example, a mobile phone (mobile phone), a tablet computer (pad), a computer with a wireless transceiver function, a virtual reality (virtual reality, VR) terminal device, or an augmented reality (augmented reality, AR) terminal device. The terminal device may alternatively be a wireless terminal in industrial control (industrial control), a machine type communication (machine type communication, MTC) terminal, customer premises equipment (customer premises equipment, CPE), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device that has a wireless communication function, a computing device, or another processing device connected to a wireless modem, a vehicle-mounted device, a wearable device, a terminal device in a 5G network, or a terminal device in a future evolved public land mobile network (public land mobile network, PLMN).
3. Access and mobility management function (access and mobility management function, AMF): An access and mobility management function is mainly used for mobility management, access management, and the like, and may be used to implement functions, for example, a lawful interception function or an access authorization (or authentication) function, other than a session management function of a mobility management entity (mobility management entity, MME). In embodiments of this application, the AMF may be used to implement functions of an access and mobility management function.
4. Session management function (session management function, SMF): A session management function is mainly used for session management, allocation and management of an internet protocol (internet protocol, IP) address of a terminal device, selection and management endpoints of interfaces of a user plane function, a policy control function, or a charging function, downlink data notification, and the like. In embodiments of this application, the SMF may be used to implement functions of a session management function.
5. Policy control function (policy control function, PCF): A policy control function is a unified policy framework for guiding network behavior, and provides policy rule information and the like for a control plane function (such as an AMF or an SMF).
6. Application function (application function, AF): An application function is used to perform application-affected data routing, access a network exposure function, or interact with a policy framework to perform policy control.
7. Unified data management (unified data management, UDM): A unified data management is used to perform unified data management, 5G user data management, user identifier processing, access authentication, registration, mobility management, or the like.
8. Unified data repository (unified data repository, UDR): A unified data repository is used by a UDM to store subscription data or read the subscription data, or is used by a PCF to store policy data or read the policy data.
9. User plane function (user plane function, UPF): A user plane function may be used to perform packet routing and forwarding, perform quality of service (quality of service, QoS) processing on user plane data, or the like. User data may be accessed to a data network (data network, DN) through the user plane function. In embodiments of this application, the user plane function may be configured to implement functions of a user plane function.
10. Data network (digital network, DN): A data network is a network that provides data transmission, for example, an operator service network, the Internet (Internet), and a third-party service network.
11. Network repository function (network repository function, NRF): A network repository function is used to store a network functional entity and description information of a service provided by the network functional entity, and support functions such as service discovery and network element entity discovery.
12. Network exposure function (network exposure function, NEF): A network exposure function is used to securely expose, to the outside, a service, a capability, and the like that are provided by a 3rd generation partnership project (3GPP) network function.
13. Edge application server (edge application server, EAS): In an edge computing (edge computing, EC) deployment scenario, some services may be provided by a plurality of EASs deployed at a network edge. These EASs provide same services and content, but have different internet protocol (internet protocol, IP) addresses (an anycast address is not included and is not considered in this application). When UE needs to access the services, in the EC scenario, the UE is required to access an available EAS nearest to the UE.
14. Edge application server discovery function (edge application server discovery function, EASDF): An edge application server discovery function is a new network element EASDF that assists in discovering an EAS, and a main function of the EASDF is to process a domain name system (domain name system, DNS) message based on an indication of an SMF. For example, the EASDF reports the DNS message to the SMF, adds, to a DNS query (query), an extended mechanisms for DNS (extended mechanisms for DNS, EDNS) client subnet option (client subnet option) (the EDNS client subnet option is also referred to as "ECS option" for short), forwards the DNS query to a DNS server, and forwards a DNS response (response) to UE.

In the network architecture, an N2 interface is an interface between the RAN and the AMF, and is configured to send a non-access stratum (non-access stratum, NAS) message and the like; an N3 interface is an interface between the RAN and the UPF, and is configured to transmit user plane data and the like; an N4 interface is an interface between the SMF and the UPF, and is configured to transmit information such as identification information of a tunnel connected to the N3 interface, data buffer indication information, and a downlink data notification message; an N6 interface is an interface between the UPF and the DN, and is configured to transmit user plane data between the UPF and the DN; and an N9 interface is an interface between UPFs, for example, the N9 interface may be an interface between a visited-policy control function (visited-policy control function, V-PCF) and a home-policy control function (home-policy control function, H-PCF) or an interface between a UPF connected to the DN and a UPF connected to the RAN, and the N9 interface is configured to transmit user plane data between the UPFs.

It should be understood that the foregoing network architecture applied to embodiments of this application is merely an example of a network architecture described from a perspective of a conventional point-to-point architecture and a service-based architecture, and a network architecture applicable to embodiments of this application is not limited thereto. Any network architecture that can implement functions of the foregoing network elements is applicable to embodiments of this application.

It should be noted that, in this application, names of network elements are merely examples. This application does not exclude a case in which the network elements have other names in the future and a case in which functions of the network elements are combined. With evolution of technologies, any device or network element that can implement functions of the foregoing network elements falls within the protection scope of this application.

It should be understood that names of interfaces between the network elements in FIG. 1 are merely examples. In specific implementation, the interfaces may have other names. This is not specifically limited in this application. In addition, names of messages (or signaling) transmitted between the foregoing network elements are merely examples, and do not constitute any limitation on functions of the messages.

For ease of understanding the technical solutions of this application, the following briefly describes a protocol data unit (protocol data unit, PDU) session (session) with reference to content related to the technical solutions of this application.

A PDU session is a process in which a user terminal UE communicates with a data network DN. After the PDU session is established, a data transmission channel between the UE and the DN is established. Each PDU session supports one PDU session type (for example, IPv4, IPv6, IPv4v6, Ethernet (Ethernet), and unstructured (unstructured)). One PDU session may have a plurality of PDU session anchors (anchors). To support a function in which routing to the DN can be selective and support a service and session continuity (service and session continuity, SSC) mode (mode) 3, an SMF may control data routing of a PDU session, to enable the PDU session to have a plurality of N6 interfaces at the same time. A UPF on each N6 interface may be referred to as a PDU session anchor. A multi-PDU session anchor for a single PDU session may be implemented in the following two manners.

Manner 1: Use an uplink classifier (uplink classifier, UL CL) in one PDU session.

The SMF may insert an uplink classifier "UL CL" into a data transmission path of the PDU session. A function of the "UL CL" may be provided in the UPF. The "UL CL" is used to forward, to a specified path, a data packet that meets a service filtering rule, which is similar to a function of a routing table. The SMF controls insertion and deletion of the "UL CL". The SMF may perform operations on the UPF through an N4 interface. The SMF determines whether to perform operations on the UPF by depending on a capability of the UPF, that is, whether the UPF supports the "UL CL". UE is unaware of a data forwarding function of the "UL CL" in a core network. Therefore, the UE does not participate in insertion and deletion of the "UL CL". When a "UL CL" is inserted into a data path of a PDU session, the PDU session has a plurality of PDU session anchors, and these anchors provide a plurality of different paths to a same DN. A function of the "UL CL" is to forward uplink service data to different PDU session anchors based on filter requirements and combine downlink data from a plurality of anchors of the UE.

FIG. 1 may be considered as a scenario in which one PDU session has two PDU session anchors. An uplink classifier (UL CL) is installed on a UPF at a termination point of an N3 interface, an anchor (C-PSA) and an anchor (L-PAS) are terminated on N6 interfaces, and transmission between an uplink classifier UPF and an anchor UPF is performed through an N9 interface.

Manner 2: Use IPv6 multi-homing (multi-homing) in one PDU session.

One PDU session may be associated with a plurality of IPv6 prefixes, and the PDU session is referred to as a multi-homed PDU session. The multi-homed PDU session may access one data network DN through a plurality of PDU session anchors. Data paths corresponding to all the PDU session anchors are eventually converged on a common UPF, the common UPF has a "branching point" (branching point, BP) function, and the common UPF is referred to as a branching point UPF. A branching point forwards uplink service packets to different PDU anchors and combines downlink data from the anchors. The branching point UPF may be used for charging statistics and rate control. An SMF controls insertion or removal of the branching point on a UPF through an N4 interface. The SMF performs the foregoing operations by depending on a capability of the UPF, that is, whether the UPF supports the branching pointing function.

FIG. 1 may be considered as a scenario in which one PDU session has two PDU session anchors. When a network needs to switch an anchor of an access network, a new anchor that accesses a same data network is first established (for example, an L-PDU session anchor (session anchor, L-PSA) in FIG. 1), and then an old anchor (for example, a C-PSA in FIG. 1) is released. In an anchor switching process, UE may obtain continuous services, and services are not affected.

The foregoing content briefly describes the PDU session. To better understand the technical solutions in embodiments of this application, nouns or terms in this application are briefly described before embodiments of this application are described.
(1) Data network name (data network name, DNN): A data network name DNN may be used to select an SMF that establishes a protocol data unit (protocol data unit, PDU) session and a UPF, or may be used to determine a policy applied to the PDU session. The DNN includes two parts: (1) a network identification (identification, ID) that indicates an external network and that is mandatory; and (2) an operator ID that indicates an operator to which the DNN belongs and that is optional.
(2) Single network slice selection assistance information (single network slice selection assistance information, S-NSSAI): Single network slice selection assistance information may uniquely identify a network slice, and may include one or more data network names DNNs for an AMF to select. An SMF selected for a PDU session is specified in the DNN. NSSAI is a set of S-NSSAI, and may identify a group of network slices. When UE is performing services, the UE may select a corresponding slice group (including an AMF/an SMF/a UPF) based on the S-NSSAI. When the UE performs an attach (attach) operation, the UE provides the S-NSSAI information, and a gNB selects a 5G core network (5G core network, 5GC) based on the S-NSSAI information. If the UE does not provide related S-NSSAI information, the gNB routes NAS information of the UE to a default 5GC.
(3) Data network access identifier (data network access identifier, DNAI): A data network access identifier is an identifier for user plane access of one or more DNs that deploy an application process.

In 4G and earlier conventional mobile network architectures and deployments, user plane devices are deployed in a tree topology. An uplink user packet passes through a base station and a backhaul network, and finally accesses a data network through centrally deployed anchor gateways. These anchor gateways are generally deployed at a high location in the network, for example, a central equipment room in a large area. This topology structure is simple, and facilitates centralized service management and control and packet processing by an operator at anchors. With explosive growth of mobile service traffic, this type of deployment mode becomes increasingly difficult to support a fast-growing mobile service traffic model. In one aspect, in a network in which anchor gateways are deployed in a centralized manner, increased traffic is finally concentrated in gateways and core equipment rooms. This poses increasingly high requirements on backhaul network bandwidth, an equipment room throughput, and a gateway specification. In another aspect, a backhaul network with a long distance from an access point to an anchor gateway and a complex transmission environment also cause a large delay and jitter in user packet transmission.

Based on the foregoing background, an edge computing (edge computing, EC) concept is proposed in the industry. The EC can move a UPF and a service processing capability downward to a network edge, to implement local processing of distributed service traffic. This avoids excessive traffic concentration and greatly reduces specification requirements for core equipment rooms and centralized gateways. In addition, a distance of a backhaul network is shortened, and an end-to-end (end to end, E2E) delay and jitter of a user packet are reduced. This allows deployment of an ultra-low-latency service to be possible.

As mentioned earlier, in an EC deployment scenario, some services may be provided by a plurality of EASs deployed at a network edge. These EASs provide same services and content, but have different IP addresses (an anycast address is not included, and is not considered in this application). When UE needs to access the services, in the EC scenario, the UE is required to access an available EAS nearest to the UE. Therefore, the UE needs to obtain an IP address of an appropriate EAS. A standard TS 23.548 of the 3rd generation partnership project (3rd generation partnership project, 3GPP) defines a new network element EASDF that assists in discovering an EAS. A main function of the EASDF is to process a domain name system (domain name system, DNS) message based on an indication of an SMF.

A procedure of discovering the EAS by using the EASDF is as follows: After the SMF selects the EASDF during a session establishment procedure, the SMF may send a DNS handling rule to the EASDF through a PDU session (that is, the DNS handling rule is sent at a session granularity). The DNS handling rule includes one or more of information about a fully qualified domain name (fully qualified domain name, FQDN), information about an IP address of the EAS, and information about a DNS server identifier (identifier). An FQDN range and an EAS IP address range indicate a deployment status of edge services. If an FQDN or an EAS IP address of a service falls within the foregoing ranges, it indicates that the service is deployed at a local edge. When the EASDF receives a DNS query (query) from UE, the EASDF matches an FQDN included in the DNS query with the foregoing FQDN range. If the FQDN falls within the FQDN range, the EASDF sends a DNS message report to the SMF, and obtains an ECS option from the SMF. The ECS option is an extension item in the DNS message and represents location information of the UE. The EASDF adds the ECS option to the DNS query and forwards the DNS query to a DNS server. After receiving a DNS response from the DNS server, the EASDF matches an EAS IP address included in the DNS response with the foregoing EAS IP address range. If the EAS IP address falls within the EAS IP address range, the EASDF sends a DNS message report to the SMF, and the SMF inserts a "UL CL" or a "BP" and indicates the EASDF to forward the DNS response to the UE, to complete local service discovery.

It can be learned from the foregoing procedure that when the SMF sends deployment information of an EAS to the EASDF at a session granularity, deployment information that is of EASs and that is sent in a large number of PDU sessions is the same. As a result, information is repeatedly sent. Therefore, a technology for sending node-level deployment information of an EAS is adopted at the 3GPP SA WG2#145E meeting. "Node-level" refers to sending information at a device granularity. That is, the SMF obtains deployment information of an EAS from a UDR at the device granularity, and sends a node-level DNS handling rule to the EASDF at the device granularity.

However, although a node-level sending technology is used in a current procedure in which the SMF obtains deployment information of an EAS from the UDR, all UEs and all PDU sessions that use a same EASDF share a same DNS handling rule. Actually, different UEs or PDU sessions have different permissions for services that can be accessed through EC. For example, only UE #1 and UE #3 can access a service #A, and other UEs are not authorized to access the service #A. If the current technical solution is used, all UEs (for example, the UE #1 to UE #10) that use a same EASDF can access the service #A. In addition, it can be learned from the foregoing procedure that the ECS option is sent and stored at a session granularity. For each PDU session, the EASDF requests an ECS option from the SMF after receiving a DNS query, thereby causing a large quantity of repeated ECS options. Therefore, a communication method is required to resolve a problem that different UEs or PDU sessions have different permissions to access EC services, and the communication method can be used to resolve a problem that ECS options are repeatedly requested and sent in different PDU sessions.

In view of this, this application provides a communication method. An SMF sends, to an EASDF, a correspondence between identification information of domain name system DNS handling information and the DNS handling information. The SMF sends, to the EASDF, a DNS handling rule that is based on the identification information of the DNS handling information, so that the EASDF may use different DNS handling information for different PDU sessions or UEs. This further implements differentiated handling of DNS messages, resolves a problem that different UEs have different permissions to access EC services, and improves service experience of a user. In addition, repeated sending of information can be avoided, signaling interaction can be reduced, and information processing efficiency can be improved.

It should be noted that actions of a UDR in the following embodiments of this application may also be performed by a UDM. In the following embodiments of this application, the UDR is merely used as an example for description. This is not limited herein.

It should be noted that, in the following embodiments of this application, a terminal device is described by using user equipment UE as an example.

FIG. 2 is a schematic flowchart of a communication method 200 according to this application. The method in FIG. 2 includes the following steps.

Step 201: A session management function SMF obtains at least one group of first association relationships.

The first association relationship is a correspondence between identification information of domain name system DNS handling information and the DNS handling information.

In this application, the identification information of the DNS handling information identifies the DNS handling information, and may be one of the following: a UE group ID, a rule (rule) ID, a DNAI, a DNN, S-NSSAI, or the like. The rule ID indicates a corresponding rule.

In a possible implementation, the SMF may determine the first association relationship based on an obtained second association relationship (that is, an association relationship between a UE group ID and deployment information of an EAS) and the UE group ID.

In a possible implementation, the SMF may determine the first association relationship based on an obtained second association relationship, a UE group ID, and a rule ID.

In a possible implementation, the first association relationship may be configured on an EASDF.

In this application, the DNS handling information may include DNS detection information or a DNS handling parameter. The DNS handling information may alternatively include the DNS detection information and the DNS handling parameter.

In this application, the deployment information of the EAS includes one or more of the following: information about an FQDN corresponding to a DNAI, information about an internet protocol address of the edge application server, and identification information of a DNS server.

In this application, if the DNS handling information is the DNS detection information, the DNS detection information may be used by the EASDF to determine a DNS message handling action corresponding to a DNS message. Specifically, the DNS detection information may be used by the EASDF to match the DNS message to determine a handling action for the DNS message. For example, the DNS detection information may include a fully qualified domain name FQDN range and/or an edge application server internet protocol address range. For another example, the DNS detection information may include a fully qualified domain name FQDN range and/or an edge application server internet protocol address range and information about a DNS message handling action. The DNS message handling action may include one or more of the following: reporting the DNS message, reporting content in the DNS message, caching the DNS message, and forwarding the DNS message.

In this application, if the DNS handling information is the DNS handling parameter, the DNS handling parameter may be a correspondence between a DNAI and an ECS option, and is used by the EASDF to determine the ECS option; the DNS handling parameter may be a correspondence between a DNAI, and an FQDN and an ECS option, and is used by the EASDF to determine the ECS option; the DNS handling parameter may be a correspondence between a DNAI and a local DNS server address, and is used by the EASDF to determine the local DNS server address; or the DNS handling parameter may be a correspondence between a DNAI, and an FQDN and a local DNS server address, and is used by the EASDF to determine the local DNS server address.

In this application, if the identification information of the DNS handling information is a DNAI, and the DNS handling information is the DNS handling parameter, the DNS handling parameter may be an EDNS client subnet option; or if the identification information of the DNS handling information is a DNAI, and the DNS handling information is the DNS handling parameter, the DNS handling parameter may be a correspondence between an FQDN and an EDNS client subnet option; or if the identification information of the DNS handling information is a DNAI, and the DNS handling information is the DNS handling parameter, the DNS handling parameter may be a local DNS server address; or if the identification information of the DNS handling information is a DNAI, and the DNS handling information is the DNS handling parameter, the DNS handling parameter may be a correspondence between an FQDN and a local DNS server address.

Step 202: The SMF sends, to the EASDF, the at least one group of first association relationships used for protocol data unit PDU sessions of a plurality of terminal devices. Correspondingly, the EASDF receives the at least one group of first association relationships used for the protocol data unit PDU sessions of the plurality of terminal devices.

In this application, the EASDF may obtain at least one group of first association relationships used for the PDU sessions of a plurality of UEs, where "the plurality of UEs" may be understood as a plurality of or all of UEs to which the first association relationships are applicable. The plurality of PDU sessions may be understood as a plurality of or all of PDU sessions to which the first association relationships are applicable.

In a possible implementation, the SMF may send a "node-level DNS context" create request to the EASDF, where the request includes the first association relationship. In another possible implementation, this step may alternatively be triggered when the SMF receives a PDU session establishment request, or in another manner. This is not limited herein.

Step 203: The SMF sends, to the EASDF, a first message corresponding to first UE or a first PDU session, where the first message includes first identification information. Correspondingly, the EASDF receives the first message.

In this application, the first identification information is identification information of DNS handling information corresponding to the first UE or the first PDU session, and the first identification information is used by the EASDF to determine, based on the first identification information and the first association relationship, the DNS handling information corresponding to the first PDU session.

For example, the first identification information may be a UE group ID, a rule ID, a DNAI, a DNN, S-NSSAI, or the like.

Step 204: The EASDF determines, based on the first identification information and the first association relationship, the DNS handling information corresponding to the first UE or the first PDU session.

In a possible implementation, the EASDF may determine, based on the first identification information and the first association relationship, a handling action for the DNS message. Specifically, the EASDF matches the DNS message based on the first identification information and the first association relationship, and determines the handling action for the DNS message.

In a possible implementation, the EASDF may determine the ECS option or the local DNS server address based on the first identification information and the first association relationship.

For example, the EASDF matches the DNS message based on the first identification information and the first association relationship, and determines the EDNS client subnet option by matching the DNS message. The EASDF adds the determined EDNS client subnet option to the DNS message, and sends the DNS message to a DNS server. For another example, the EASDF matches the DNS message based on the first identification information and the first association relationship, and determines the local DNS server address by matching the DNS message. The EASDF sends the DNS message to a local DNS server.

In a possible implementation, the EASDF may match the first association relationship based on the first identification information, and determine the EDNS client subnet option by matching the first association relationship; or the EASDF may match the first association relationship based on the first identification information, and determine the local DNS server address by matching the first association relationship.

According to the method provided in this application, the SMF sends, to the EASDF, the correspondence between the identification information of the domain name system DNS handling information and the DNS handling information. In this way, the SMF may send, to the EASDF by using different sessions or UE subscription information, differentiated deployment information of EASs for different PDU sessions or UEs, and the EASDF may use different DNS handling information. This implements differentiated handling of DNS messages, and improves service experience of a user. In addition, repeated sending of information can be avoided, signaling interaction can be reduced, and information processing efficiency can be improved.

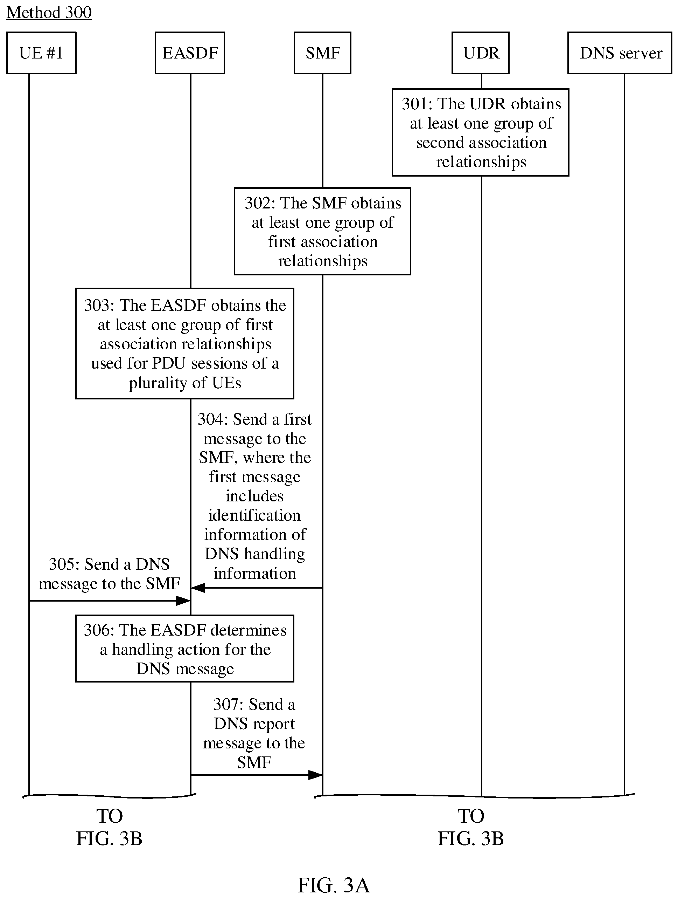

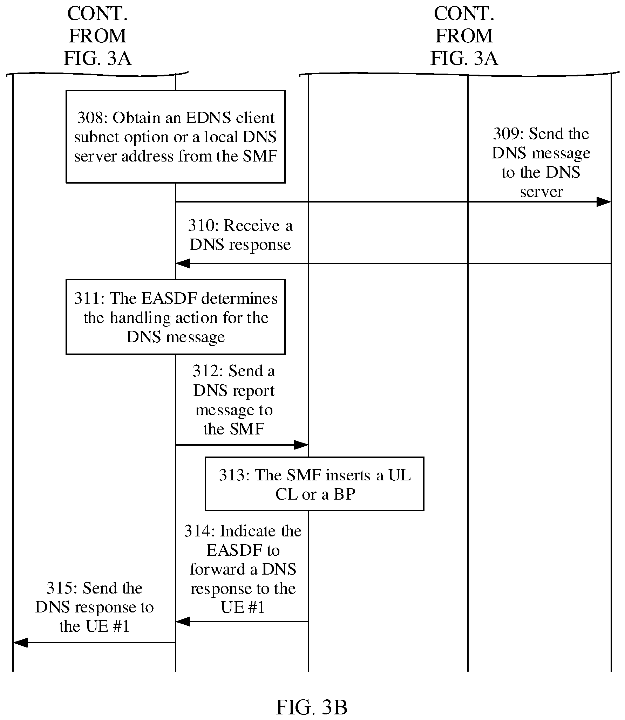

FIG. 3A and FIG. 3B are a schematic flowchart of a communication method 300 according to this application. The method in FIG. 3A and FIG. 3B includes the following steps.

Step 301: A UDR obtains at least one group of second association relationships, where the second association relationship is a correspondence between user equipment group (UE group) identifier (identifier, ID) information (a UE group ID may be an internal group ID or an external group ID) and deployment information of an edge application server.

In this application, the deployment information of the EAS may include one or more of the following information: information about an FQDN corresponding to a DNAI, information about an IP address of the EAS, and identification information of a DNS server.

In an example, the UDR may obtain an association relationship between a UE group ID #1 and deployment information of an EAS, that is, a correspondence (which may also be understood as a "mapping relationship") between "the UE group ID #1 and the deployment information of the EAS". For example, the deployment information of the EAS may be an FQDN range corresponding to each DNAI in the UE group ID #1, an EAS IP address range, and a DNS server identifier. That is, the second association relationship may be a correspondence between "the UE group ID #1, and the FQDN range, the EAS IP address range, and the DNS server identifier".

In a possible implementation, an AF may initiate an AF request (request) to the UDR, to send, to the UDR, one or more groups of association relationships between the UE group IDs #1 and the deployment information of the EAS.

For example, an association relationship between a UE group ID and deployment information of an EAS refers to deployment information of an EAS corresponding to a service that can be accessed by UE corresponding to the UE group ID through EC. In an example, a service #A only allows UE of an employee of a company #A to access through EC. It is assumed that a UE group ID #3 corresponds to the UE of the employee of the company #A, in deployment information of an EAS corresponding to the UE group ID #3, an FQDN range should include an FQDN corresponding to the service #A, and an EAS IP range should include an IP address of an EAS that provides the service #A. If a UE group ID of UE of an employee is not the UE group ID #3, deployment information of an EAS corresponding to the UE of the employee does not include the FQDN or the EAS IP, that is, the UE of the employee cannot access the service #A.

In another possible implementation, the correspondence between the UE group ID and the deployment information of the EAS may be preconfigured on the UDR, or some of the foregoing correspondences may be preconfigured, and some of the foregoing correspondences may be provided by the AF. If all of the correspondences between the UE group IDs and the deployment information of the EAS are preconfigured on the UDR, this step is skipped.

Step 302: An SMF obtains at least one group of first association relationships, where the first association relationship is a correspondence between identification information of domain name system DNS handling information and the DNS handling information.

In this application, the DNS handling information may include DNS detection information or a DNS handling parameter.

In this embodiment, that the DNS handling information is the DNS detection information is used as an example. That is, in this embodiment, the first association relationship is described by using the correspondence between the identification information of the domain name system DNS handling information and the DNS detection information as an example.

In this embodiment, the identification information of the DNS handling information may be one of the following: a UE group ID, a rule (rule) ID, a DNAI, a DNN, S-NSSAI, or the like. For ease of description, this embodiment is described by using only an example in which the identification information of the DNS handling information is a rule ID. The rule ID mentioned in the following embodiments may be any piece of the foregoing identification information of the DNS handling information. This is not limited. The rule ID indicates a corresponding rule.

This embodiment is described by using an example in which the identification information of the DNS handling information is a rule ID, and the DNS detection information is a fully qualified domain name FQDN range and/or an edge application server internet protocol address range, or the DNS detection information is an FQDN range and/or an EAS IP address range, and information about a handling action for a DNS message. In this application, the handling action for the DNS message may include: reporting content in the DNS message to the SMF, caching the DNS message, forwarding the DNS message (for example, forwarding the DNS message to UE or a DNS server), and the like. In this embodiment, the DNS message may be received by an EASDF from the UE or the DNS server.

In this embodiment, a function of the first association relationship is that the EASDF may subsequently determine, based on the DNS message and the first association relationship, the handling action for the DNS message. Specifically, the EASDF may subsequently determine a rule ID based on an IP address corresponding to UE, to further determine an FQDN range and/or an EAS IP address range of the UE, and the handling action for the DNS message.

In an example, if the DNS detection information is a fully qualified domain name FQDN range and/or an EAS IP address range, the first association relationship may be, for example, a correspondence between "a rule ID #1 and an FQDN range", a correspondence between "a rule ID #1 and an EAS IP address range", a correspondence between "a rule ID #1, and an FQDN range and an EAS IP address range", or the like. A rule ID #2, a rule ID #3, ..., a rule ID #N (N is an integer greater than 0) are similar to the rule ID #1. Details are not described again.

In a possible implementation, the SMF may request the deployment information of the EAS from the UDR, and then the UDR sends, to the SMF, the second association relationship, that is, the association relationship between the UE group ID and the deployment information of the EAS.

In another possible implementation, the SMF may subscribe to a notification of the deployment information of the EAS, and when a notification condition is met, the UDR may send a notification message to the SMF, and send, to the SMF, the association relationship between the UE group ID and the deployment information of the EAS and/or the handling action for the DNS message.

Alternatively, when an event such as expiration of an internal timer of the SMF is triggered, the UDR may send, to the SMF, the association relationship between the UE group ID and the deployment information of the EAS.

In another possible implementation of this step, the UDR may further send, to the SMF, an association relationship between identification information of UE and the deployment information of the EAS and an association relationship between the identification information of the UE and a UE group ID separately through two messages. In this implementation, the SMF needs to determine an association relationship between the UE group ID and the deployment information of the EAS based on content of the two messages.

In a possible implementation, the SMF locally configures a UE group ID or obtains a UE group ID from subscription data.

In a possible implementation, the SMF locally configures a rule ID or obtains a rule ID from a PCF, where the rule ID corresponds to a UE group ID.

In a possible implementation, the SMF determines the first association relationship based on an obtained second association relationship and a UE group ID.

In a possible implementation, the SMF determines the first association relationship based on an obtained second association relationship, a UE group ID, and a rule ID.

In an example, if the DNS detection information further includes information about a DNS message handling action (which may also be understood as "information that is about a DNS message handling action performed by the EASDF based on a rule ID"), the first association relationship may be, for example, a correspondence between "the rule ID #1, and the FQDN range and reporting content in a DNS message to the SMF", a correspondence between "the rule ID #1, and the FQDN range and forwarding a DNS message", a correspondence between "the rule ID #1, and the EAS IP address range and forwarding a DNS message", a correspondence between "the rule ID #1, and the EAS IP address range and caching a DNS message", or the like. A rule ID #2, a rule ID #3, ..., a rule ID #N (N is an integer greater than 0) are similar to the rule ID #1. Details are not described again.

Step 303: The EASDF obtains at least one group of first association relationships used for PDU sessions of a plurality of UEs.

In this application, the EASDF may obtain the at least one group of first association relationships used for the PDU sessions of the plurality of UEs, where "the plurality of UEs" may be understood as a plurality of or all of UEs to which the first association relationships are applicable. The plurality of PDU sessions may be understood as a plurality of or all of PDU sessions to which the first association relationships are applicable.

In a possible implementation, the at least one group of first association relationships used for the PDU sessions of the plurality of UEs may be preconfigured on the EASDF.

In another possible implementation, the SMF may send, to the EASDF, the at least one group of first association relationships used for the PDU sessions of the plurality of UEs.

In an example, an implementation of this step may be that the SMF sends a "node-level DNS context" create request to the EASDF, where the request includes the first association relationship. In another possible implementation, this step may alternatively be triggered when the SMF receives a PDU session establishment request, or in another manner. This is not limited herein.

Specifically, a "node-level DNS context" may include a "node-level DNS handling rule", and the "node-level DNS handling rule" may include at least one group of first association relationships. Alternatively, the "node-level DNS context" may include at least one group of association relationships between rule IDs and "node-level DNS handling rules", where each "node-level DNS handling rule" includes a group of DNS detection information. For example, the "node-level DNS context" includes an association relationship between "the rule ID #1 and a node-level DNS handling rule #1", an association relationship between "a rule ID #2 and a node-level DNS handling rule #2", an association relationship between "a rule ID #3 and a node-level DNS handling rule #3", and an association relationship between "a rule ID #4 and a node-level DNS handling rule #4". In an example, the node-level DNS handling rule #1 includes a group of DNS detection information. For example, the node-level DNS handling rule #1 includes a group of {FQDN ranges} or a group of {FQDN ranges, EAS IP ranges}. In another example, the node-level DNS handling rule #1 further includes a DNS message handling action. For example, the node-level DNS handling rule #1 includes a group of {FQDN ranges, EAS IP ranges, reporting content in DNS messages to the SMF}, or the node-level DNS handling rule #1 includes a group of {FQDN ranges, EAS IP ranges, forwarding DNS messages}. The node-level DNS handling rule #2, the node-level DNS handling rule #3, and the like are similar to the node-level DNS handling rule #1. Details are not described again.

In this application, information in this step may be sent by using a Neasdf_NodeLevelDNSHandlingRules_Create/Update or another message. This is not limited herein.

It should be noted that in this application, the step 301 to the step 303 are performed at a node granularity. The following steps 304 to 314 are performed at a session granularity.

Step 304: The SMF sends a first message to the EASDF, where the first message includes a first identifier.

For example, a first PDU session corresponds to a message #1 (which is an example of the first message), and the first message includes a rule ID (which is an example of the first identifier).

It should be noted that, in this embodiment, the first identifier may be DNS handling information corresponding to first UE or the first PDU session.

In this embodiment, the first identifier may be one of the following: a UE group ID, a rule (rule) ID, a DNAI, a DNN, S-NSSAI, or the like. For ease of description, this embodiment is described by using only an example in which the first identifier is a rule ID. The rule ID mentioned in the following embodiments may be any one of the foregoing first identifiers. This is not limited.

For example, the SMF may send a "session granularity DNS context" create request to the EASDF.

In a possible implementation, the request includes an IP address of UE #1, a DNN of a PDU session, and a "session granularity DNS handling rule". The "session granularity DNS handling rule" includes a rule ID. The rule ID herein refers to an ID corresponding to a PDU session or UE associated with the PDU session. For example, a rule ID associated with the first PDU session is a rule ID #1.

In another possible implementation, the request includes an IP address of UE #1, a DNN of a PDU session, a "session granularity DNS handling rule", and a rule ID. In this case, the rule ID is not included in the "session granularity DNS handling rule", but is used as an information element in parallel with the IP address of the UE #1, the DNN of the PDU session, and the "session granularity DNS handling rule". The rule ID is sent by the SMF to the EASDF in this step.

In this application, information in this step may be sent by using a Neasdf_DNSContext_Create/Update Request or another message. This is not limited herein.

Optionally, indication information #1 (which is an example of first indication information) may be further sent in this step. A function of the indication information #1 is to indicate the EASDF to handle a DNS message based on the "node-level DNS handling rule" after the EASDF receives a DNS query sent by the UE #1 or receives a DNS response sent by a DNS server. Certainly, the foregoing logic may also be configured on the EASDF when the EASDF is delivered from a factory or when a network is deployed. In this case, the indication information #1 does not need to be sent.

Step 305: The UE #1 (which is an example of the first UE) sends a DNS query (which is an example of the DNS message) to the EASDF, where the DNS query includes an FQDN. Correspondingly, the EASDF receives the DNS query.

Step 306: The EASDF determines, based on the DNS query, the session granularity DNS context, and the node-level DNS context, a handling action for the DNS message.

In a possible implementation, the EASDF may determine, based on the UE group ID and the first association relationship, the handling action for the DNS message.

In another possible implementation, the EASDF may match the DNS message based on the UE group ID and the first association relationship, and determine the handling action for the DNS message.

In an example, after receiving the DNS query sent by the UE #1, the EASDF may perform the following steps. (1) The EASDF may determine, based on the IP address of the UE #1 and/or the DNN of the PDU session and the session granularity DNS context, a rule ID corresponding to the PDU session. For example, the EASDF may determine a source (source) IP address of the DNS query sent by the UE #1 as the IP address of the UE #1. Because the session granularity DNS context already includes the IP address of the UE #1, the DNN of the PDU session, and the rule ID (it is assumed that a rule ID corresponding to the UE #1 is a rule ID #1), the EASDF may determine, based on the IP address of the UE #1 and/or the DNN of the PDU session, that a rule ID of the UE #1 is the rule ID #1. (2) The EASDF may determine, based on the rule ID (and the indication information #1, if the indication information #1 is included in the step 304) and the node-level DNS context, an FQDN range and/or the handling action for the DNS message. The node-level DNS context includes one or more groups of first association relationships, that is, an association relationship between a rule ID and the DNS detection information. Therefore, the FQDN range and the handling action for the DNS message may be determined based on the rule ID. It may also be understood as that the EASDF matches the DNS message. (3) The EASDF may determine, based on the FQDN range, whether to perform the handling action for the DNS message, for example, whether to report the DNS message to the SMF. A scenario considered in this application is that the EASDF successfully determines the FQDN range, that is, a scenario in which the EASDF successfully matches an FQDN in the DNS message sent by the UE #1 with an FQDN range included in the first association relationship sent by the SMF. In this case, the EASDF may send a DNS report message to the SMF.

If the EASDF fails to determine an FQDN range when performing the step (2), the EASDF does not report to the SMF. Subsequent steps are separated from the EC scenario, and are not discussed in this application.

Step 307: The EASDF sends a DNS report message to the SMF.

The EASDF performs matching between an FQDN included in the DNS query and an FQDN range included in the first association relationship sent by the SMF. If the FQDN falls within the FQDN range, the EASDF sends the DNS report message to the SMF, where the DNS report message includes an FQDN corresponding to the DNS query.

Step 308: The EASDF obtains the ECS option or the local DNS server address from the SMF.

As described above, the ECS option is an extension item in the DNS message, and represents location information of UE.

Once the EASDF sends the DNS report message to the SMF in the step 307, the SMF may send, to the EASDF, an ECS option or an address of a local DNS server of the UE.

Step 309: The EASDF forwards the DNS message to a DNS server. The corresponding DNS server may receive the DNS message.

In a possible implementation, the EASDF may add the ECS option to the DNS query, and forward, to the DNS server, the DNS message to which the ECS option is added.

In another possible implementation, the EASDF forwards the DNS message to the local DNS server obtained in the step 308.

Step 310: The EASDF receives a DNS response from the DNS server, where the DNS response includes an FQDN or an IP address of the server.

In a possible implementation, the DNS response may include an EAS IP address.

Step 311: The EASDF determines, based on the DNS response, the session granularity DNS context, and the node-level DNS context, a handling action for the DNS message (that is, the DNS response).

In a possible implementation, the EASDF may determine, based on the rule ID and the first association relationship, the handling action for the DNS message.

In another possible implementation, the EASDF may match the DNS message based on the rule ID and the first association relationship, and determine the handling action for the DNS message.

In an example, after receiving the DNS response, the EASDF may sequentially perform the following steps. (1) The EASDF may determine, based on the IP address of the UE #1 and/or the DNN of the PDU session and the session granularity DNS context, a rule ID corresponding to the UE #1. For example, the EASDF may determine a destination (destination) IP address of the DNS response as the IP address of the UE #1. Because the session granularity DNS context includes the IP address of the UE #1, the DNN of the PDU session, and the rule ID (it is assumed that a rule ID corresponding to the UE #1 is a rule ID #1), the EASDF may determine, based on the IP address of the UE #1 and/or the DNN of the PDU session, that a rule ID of the UE #1 is the rule ID #1. (2) The EASDF may determine, based on the UE rule ID (and the indication information #1, if the indication information #1 is included in the step 304) and the node-level DNS context, the EAS IP range and/or the handling action for the DNS message. Because the node-level DNS context includes one or more groups of association relationships between the rule ID and the EAS IP range and/or the handling action for the DNS message, the EAS IP range and the handling action for the DNS message may be determined based on the rule ID. It may also be understood as that the EASDF matches the DNS message. (3) The EASDF determines, based on the EAS IP address range, whether to perform the handling action for the DNS message, for example, whether to cache the DNS message and report the DNS message to the SMF. A scenario considered in this application is that the EASDF successfully determines the EAS IP range, that is, a scenario in which the EASDF successfully matches a server IP address in the DNS response with an EAS IP address included in the first association relationship sent by the SMF. In this case, the EASDF may cache the DNS message, and then send a DNS report message to the SMF, where the DNS report message includes an EAS IP address corresponding to the DNS response.

If the EASDF fails to determine the EAS IP range when performing the step (2), the EASDF does not report to the SMF. Subsequent steps are separated from the EC scenario, and are not discussed in this application.

Step 312: The EASDF sends the DNS report message to the SMF, where the DNS report message includes an FQDN or an EAS IP address corresponding to the DNS response.

After receiving the DNS response from the DNS server, the EASDF matches an FQDN or a server IP address range included in the DNS response. If the FQDN or the server IP address range included in the DNS response falls within the FQDN range or the EAS IP address range included in the first association relationship, the EASDF sends the DNS report message to the SMF, where the DNS report message includes the FQDN or the EAS IP address corresponding to the DNS response.

Step 313: The SMF inserts a UL CL or a BP.

Specifically, the SMF may insert the UL CL and a local UPF based on the FQDN or the EAS IP address included in the DNS report message.

Step 314: The SMF indicates the EASDF to forward the DNS response to the UE #1.

In a possible implementation, the SMF may indicate the EASDF to forward the DNS response to the UE #1.

Step 315: The EASDF forwards the DNS response to the UE #1, thereby completing local service discovery.

According to the method provided in this embodiment, the SMF sends, to the EASDF, a DNS handling rule that is based on the identification information of the DNS handling information, so that the EASDF may use different DNS handling information for different PDU sessions or UEs. This implements differentiated handling of DNS messages, and improves service experience of a user.

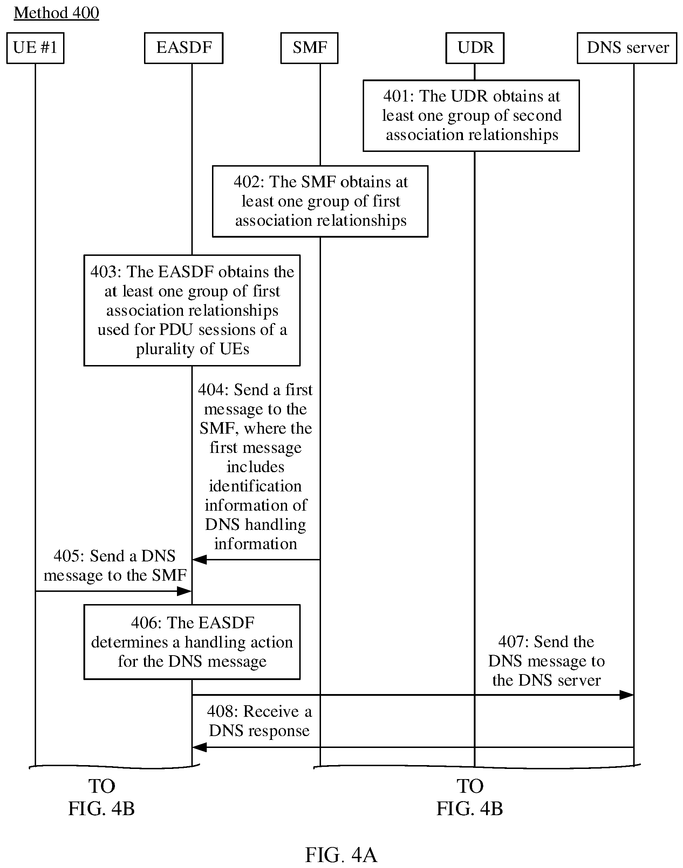

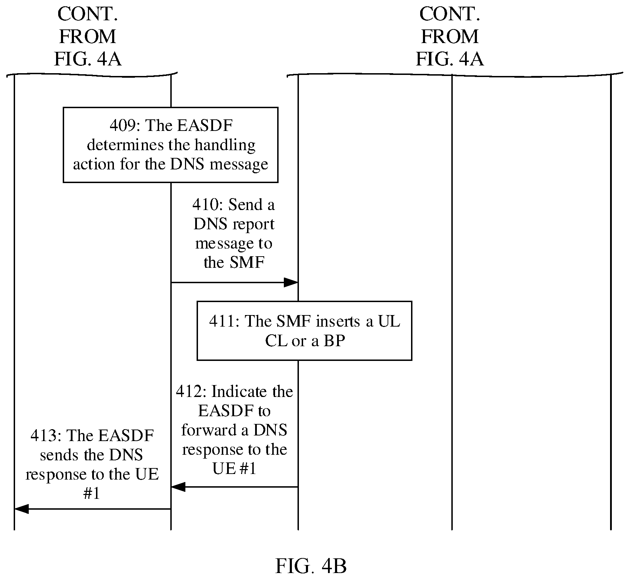

FIG. 4A and FIG. 4B are a schematic flowchart of a communication method 400 according to an embodiment of this application. The method 400 includes the following steps.

For step 401, refer to step 301 in the method 300. Details are not described again.

Step 402: An SMF obtains at least one group of first association relationships, where the first association relationship is a correspondence between identification information of domain name system DNS handling information and the DNS handling information.

### Manner 1:

In this application, the DNS handling information may include DNS detection information and a DNS handling parameter.

The first association relationship in this embodiment may be a correspondence between the identification information of the domain name system DNS handling information and the DNS detection information, that is, a correspondence between "the identification information of the DNS handling information and the DNS detection information" (which is described as a first association relationship a for ease of distinguishing, the first association relationship a is specifically described in the method 300, and details are not described herein again). Alternatively, the first association relationship in this embodiment may be an association relationship between the identification information of the domain name system DNS handling information and the DNS handling parameter, that is, an association relationship between "the identification information of the DNS handling information and the DNS handling parameter" (which is described as a first association relationship b for ease of distinguishing). It may also be understood that, in this embodiment, the SMF may obtain at least one group of first association relationships a and at least one group of first association relationships b at the same time. The following describes the first association relationship b.

In this embodiment, the identification information of the DNS handling information may be one of the following: a UE group ID, a rule (rule) ID, a DNAI, a DNN, S-NSSAI, or the like. For ease of description, this embodiment is described by using only an example in which the identification information of the DNS handling information is a rule ID. The rule ID mentioned in the following embodiments may be any piece of the foregoing identification information of the DNS handling information. This is not limited.

This embodiment is described by using an example in which the identification information of the DNS handling information is a rule ID, and the DNS detection information is a correspondence between a DNAI and an ECS option, or the DNS detection information is a correspondence between a DNAI, and an FQDN and an ECS option, or the DNS detection information is a correspondence between a DNAI and a local DNS server address, or the DNS detection information is a correspondence between a DNAI, and an FQDN and a local DNS server address. In this embodiment, the first association relationship b may be used by an EASDF to determine the ECS option and the local DNS server address by using identification information (for example, a rule ID) of DNS handling information corresponding to UE, and the EASDF does not need to send a DNS message to the SMF to report, to request the ECS option or the local DNS server address. In an example, the first association relationship b may be shown in Table 1 and Table 2.

**Table 1**

| Identification information of DNS handling information | DNS handling parameter |
|---|---|
| Rule ID #1 | DNAI #1-(FQDN #1)-ECS option #1 |
| | DNAI #2-(FQDN #2)-ECS option #2 |
| | ... |
| Rule ID #2 | DNAI #3-(FQDN #3)-ECS option #3 |
| | DNAI #4-(FQDN #4)-ECS option #4 |
| | ... |
| ... | |

**Table 2**

| Identification information of DNS handling information | DNS handling parameter |
|---|---|
| Rule ID #1 | DNAI #1-(FQDN #1)-local DNS server address #1 |
| | DNAI #2-(FQDN #2)-local DNS server address #2 |
| | ... |
| Rule ID #2 | DNAI #3-(FQDN #3)-local DNS server address #3 |
| | DNAI #4-(FQDN #4)-local DNS server address #4 |
| | ... |
| ... | |

It should be noted that a DNAI and an FQDN in an {association relationship between a DNAI and an (FQDN) and an ECS option} cannot be exactly the same as a DNAI and an FQDN in another {association relationship between a DNAI and an (FQDN) and an ECS option}, and a DNAI and an FQDN in an {association relationship between a DNAI and an (FQDN) and a local DNS server address} cannot be exactly the same as a DNAI and an FQDN in another {association relationship between a DNAI and an (FQDN) and a local DNS server address}. For example, a DNAI and an FQDN in an {association relationship between a DNAI #1 and an (FQDN) #1 and an ECS option #1} cannot be exactly the same as a DNAI and an FQDN in an {association relationship between a DNAI #2 and an (FQDN) #2 and an ECS option #2}. That is, there is no correspondence such as an {association relationship between a DNAI #1 and an (FQDN) #1 and an ECS option #1} and an {association relationship between a DNAI #1 and an (FQDN) #1 and an ECS option #2}. That is, DNAI+FQDN uniquely identifies an ECS option. In this application, "(FQDN)" means that the FQDN is optional.

It should be understood that Table 1 and Table 2 are merely examples, and are not limited thereto.

In a possible implementation, the SMF may request deployment information of an EAS from a UDR, and then the UDR sends, to the SMF, the second association relationship, that is, an association relationship between a UE group ID and deployment information of an EAS.

In another possible implementation, the SMF may subscribe to a notification of the deployment information of the EAS, and when a notification condition is met, the UDR may send a notification message to the SMF, and send, to the SMF, the association relationship between the UE group ID and the deployment information of the EAS and/or the handling action for the DNS message.

Alternatively, when an event such as expiration of an internal timer of the SMF is triggered, the UDR may send, to the SMF, the association relationship between the UE group ID and the deployment information of the EAS.

In another possible implementation of this step, the UDR may further send, to the SMF, an association relationship between identification information of UE and the deployment information of the EAS and an association relationship between the identification information of the UE and a UE group ID separately through two messages. In this implementation, the SMF needs to determine an association relationship between the UE group ID and the deployment information of the EAS based on content of the two messages.

In a possible implementation, the SMF locally configures a UE group ID or obtains a UE group ID from subscription data.

In a possible implementation, the SMF locally configures a rule ID or obtains a rule ID from a PCF, where the rule ID corresponds to a UE group ID.

In a possible implementation, the SMF determines the first association relationship based on an obtained second association relationship and a UE group ID.

In a possible implementation, the SMF determines the first association relationship based on an obtained second association relationship, a UE group ID, and a rule ID.

In a possible implementation, the SMF determines the first association relationship based on an obtained second association relationship, a UE group ID, and UPF deployment information. The UPF deployment information is a correspondence between a UPF and a DNAI or a correspondence between a DNAI and an ECS option. The UPF deployment information may be locally configured on the SMF.

In a possible implementation, the SMF determines the first association relationship based on an obtained second association relationship, a UE group ID, a rule ID, and UPF deployment information.

Specifically, in a possible implementation, the SMF may determine an association relationship between a rule ID and a list of {association relationships between DNAIs and (FQDNs) and ECS options}, or determine an association between a rule ID and a list of {association relationships between DNAIs and (FQDNs) and local DNS server addresses}. The UPF deployment information may be a correspondence between the UPF and the DNAI, or the UPF deployment information may be a correspondence between the DNAI and the ECS option. The UPF deployment information may be locally configured on the SMF, or obtained by the UPF from a network repository function (network repository function, NRF). In this case, the first association relationship b is used by the EASDF to determine the ECS option based on the rule ID, or the first association relationship b is used by the EASDF to determine the local DNS server address based on the rule ID.

### Manner 2:

Alternatively, the first association relationship obtained by the SMF may be a correspondence between "the identification information of the DNS handling information, and the DNS detection information and the DNS handling parameter". It should be noted that a relationship between "the identification information of the DNS handling information, and the DNS detection information and the DNS handling parameter" is that a rule ID may be mapped to the DNS detection information and the DNS handling parameter.

In this case, the first association relationship may be a correspondence between the identification information of the domain name system DNS handling information and the DNS detection information and the DNS handling parameter. For example, in this case, the first association relationship may be a correspondence between "a rule ID, and an FQDN range and/or an EAS IP range and an {association relationship between a DNAI and an (FQDN) and an ECS option}", or a correspondence between "a rule ID, and an FQDN range and/or an EAS IP range and a DNS message handling action, and an {association relationship between a DNAI and an (FQDN) and an ECS option}", or a correspondence between "a rule ID, and an FQDN range and/or an EAS IP range and an {association relationship between a DNAI and an (FQDN) and a local DNS server address}", or a correspondence between "a rule ID, and an FQDN range and/or an EAS IP range and a DNS message handling action, and an {association relationship between a DNAI and an (FQDN) and a local DNS server address}".

Step 403: The EASDF obtains at least one group of first association relationships used for PDU sessions of a plurality of UEs.

In this application, the EASDF may obtain the at least one group of first association relationships used for the PDU sessions of the plurality of UEs, where "the plurality of UEs" may be understood as a plurality of or all of UEs to which the first association relationships are applicable. The plurality of PDU sessions may be understood as a plurality of or all of PDU sessions to which the first association relationships are applicable.

In this embodiment, as described above, in a possible implementation, the EASDF may obtain the first association relationship a and the first association relationship b at the same time.

In a possible implementation, the at least one group of first association relationships used for the PDU sessions of the plurality of UEs may be preconfigured on the EASDF.

In another possible implementation, the SMF may send, to the EASDF, the at least one group of first association relationships used for the PDU sessions of the plurality of UEs.

In an example, an implementation of this step may be that the SMF sends a "node-level DNS context" create request to the EASDF, where the request includes the first association relationship. In another possible implementation, this step may alternatively be triggered when the SMF receives a PDU session establishment request, or in another manner. This is not limited herein.

Specifically, in a possible implementation, a "node-level DNS context" may include a "node-level DNS handling rule", and the "node-level DNS handling rule" may include at least one group of first association relationships, for example, at least one group of first association relationships a and at least one group of first association relationships b.

Alternatively, in a possible implementation, the "node-level DNS context" may include at least one group of association relationships between a rule ID and a "node-level DNS handling rule" and a list of {association relationships between DNAIs and (FQDNs) and ECS options} (that is, DNS handling parameters). It may also be understood that in this case, the "node-level DNS context" may include at least one group of association relationships between first association relationships b and rule IDs and "node-level DNS handling rules". Each node-level DNS handling rule includes a group of DNS detection information. In an example, the "node-level DNS context" includes an association relationship between "a rule ID #1 and a node-level DNS handling rule #1" and an association relationship between "a rule ID #2 and {an association relationship between a DNAI 2 and an (FQDN #2) and an ECS option #2}" (that is, the first association relationship b). For example, the node-level DNS handling rule #1 includes a group of DNS detection information. For example, the node-level DNS handling rule #1 includes a group of {FQDN ranges}, includes a group of {FQDN ranges, EAS IP ranges}, includes a group of {FQDN ranges, EAS IP ranges, handling actions for DNS messages}, and or the like.

Alternatively, in another possible implementation, the "node-level DNS context" may include at least one group of association relationships between rules ID and "node-level DNS handling rules". Each node-level DNS handling rule includes a group of DNS detection information and a group of DNS handling parameters. In an example, the "node-level DNS context" includes an association relationship between "the rule ID #1 and the node-level DNS handling rule #1", where the node-level DNS handling rule #1 includes a group of DNS detection information and a group of DNS handling parameters. For example, the node-level DNS handling rule #1 includes a group of {FQDN ranges} and a list of {association relationships between DNAIs and (FQDNs) and ECS options}, includes a group of {FQDN ranges, EAS IP ranges} and a list of {association relationships between DNAIs and (FQDNs) and ECS options}, includes a group of {FQDN ranges, EAS IP ranges, handling actions for DNS messages} and a list of {association relationships between DNAIs and (FQDNs) and local DNS server addresses}, or the like.

In this embodiment, information in this step may be sent by using a Neasdf_NodeLeveIDNSHandlingRules_Create/Update or another message. This is not limited herein.

It should be noted that in this application, the step 401 to the step 403 are performed at a node granularity. The following steps 404 to 412 are performed at a session granularity.

Step 404: The SMF sends a first message to the EASDF, where the first message includes a first identifier.

If the identification information of the DNS handling information is not a DNAI, the first message may further include a DNAI corresponding to a location of UE associated with a PDU session.

For example, a first PDU session corresponds to a message #1 (which is an example of the first message), and the first message includes a rule ID (which is an example of the first identifier).

It should be noted that the first identifier in this application may be the DNS handling information corresponding to first UE or the first PDU session.

In this embodiment, the first identifier may be one of the following: a UE group ID, a rule (rule) ID, a DNAI, a DNN, S-NSSAI, or the like. For ease of description, this embodiment is described by using only an example in which the first identifier is a rule ID. The rule ID mentioned in the following embodiments may be any one of the foregoing first identifiers. This is not limited.

For example, the SMF may send a "session granularity DNS context" create request to the EASDF.

In a possible implementation, the request may include an IP address of UE #1, an identifier of a DNN of a PDU session, and a "session granularity DNS handling rule". The "session granularity DNS handling rule" includes a rule ID and a DNAI. The rule ID is an ID corresponding to a PDU session or UE associated with the PDU session. For example, a rule ID of UE associated with a first session is a rule ID #1. The DNAI is a DNAI corresponding to a location of UE associated with a PDU session.

In another possible implementation, the request includes an IP address of UE #1, an identifier of a DNN of a PDU session, a "session granularity DNS handling rule", and a rule ID. In this case, the rule ID is not included in the "session granularity DNS handling rule", but is used as an information element in parallel with the IP address of the UE #1, the DNN of the PDU session, and the "session granularity DNS handling rule". The rule ID is sent by the SMF to the EASDF in this step.

In this application, information in this step may be sent by using a Neasdf_DNSContext_Create/Update Request or another message. This is not limited herein.

Optionally, indication information #1 (which is an example of first indication information) may be further sent in this step. A function of the indication information #1 is to indicate the EASDF to handle a DNS message based on the "node-level DNS handling rule" after the EASDF receives a DNS query sent by the UE #1 or receives a DNS response sent by a DNS server. Certainly, the foregoing logic may also be configured on the EASDF when the EASDF is delivered from a factory or when a network is deployed. In this case, the indication information #1 does not need to be sent.

Step 405: The UE #1 (which is an example of the first UE) sends a DNS query (which is an example of the DNS message) to the EASDF, where the DNS query includes an FQDN. Correspondingly, the EASDF receives the DNS query.

Step 406: The EASDF determines an ECS option or a local DNS server address of the UE #1 based on the DNS query, the session granularity DNS context, and the node-level DNS context.

In a possible implementation, the EASDF may determine the ECS option or the local DNS server address of the UE #1 based on the rule ID and the first association relationship b.

In another possible implementation, the EASDF may match the DNS message based on the rule ID and the first association relationship b, and determine the ECS option or the local DNS server address of the UE #1.

For example, after receiving the DNS query sent by the UE #1, the EASDF determines the ECS option or the local DNS server address based on the DNS query, the session granularity DNS context, and the node-level DNS context.

In an example, after receiving the DNS query sent by the UE #1, the EASDF may perform the following steps. (1) The EASDF may determine, based on the IP address of the UE #1 and/or the DNN of the PDU session and the session granularity DNS context, a rule ID corresponding to the PDU session. For example, the EASDF may determine a source (source) IP address of the DNS query sent by the UE #1 as the IP address of the UE #1. Because the session granularity DNS context already includes the IP address of the UE #1, the DNN of the PDU session, and the rule ID (it is assumed that a rule ID corresponding to the UE #1 is a rule ID #1), the EASDF may determine, based on the IP address of the UE #1, that a rule ID of the UE #1 is the rule ID #1. (2) The EASDF may determine, based on the rule ID (and the indication information #1, if the indication information #1 is included in the step 304) and the node-level DNS context, the DNS handling parameter. For example, the EASDF may determine a list of {association relationships between DNAIs and (FQDNs) and ECS options} based on the rule ID, or determine a list of {association relationships between DNAIs and (FQDNs) and local DNS server addresses} based on the rule ID. Because the node-level DNS context includes one or more groups of first association relationships b, that is, an association relationship between the rule ID and the DNS handling parameter, the DNS handling parameter may be determined based on the rule ID. (3) The EASDF may determine the ECS option or the local DNS server address based on the DNS handling parameter and the DNAI, or based on the DNS handling parameter, the DNAI, and the DNS query. For example, the ECS option or the local DNS server address is determined based on the DNAI, an FQDN included in the DNS query, and a list of {association relationships between DNAIs and (FQDNs) and ECS options} or an {association relationship between a DNAI and an (FQDN) and a local DNS server address}.

The foregoing steps (1), (2), and (3) may also be understood as that the EASDF performs matching on the DNS message. A scenario considered in this application is that the EASDF may successfully determine the ECS option or the local DNS server address, that is, a scenario in which the EASDF successfully matches the DNS message sent by the UE #1 with an association relationship that is between "the rule ID and the DNS handling parameter" and that is included in the first association relationship sent by the SMF. It may also be understood as a scenario in which the EASDF may successfully determine the ECS option of the UE #1 or the local DNS server address of the UE #1.

If when performing the step (2), the EASDF fails to determine the DNS handling parameter, the EASDF may not report to the SMF. Subsequent steps are separated from the EC scenario, and are not discussed in this application. Alternatively, the EASDF may report to the SMF based on the conventional technology, and request the ECS option or the local DNS server address. Subsequent steps are completely performed based on the conventional technology, and are not discussed in this application.

When performing the step (3), the EASDF fails to determine the ECS option or the local DNS server address, the EASDF may not report to the SMF. Subsequent steps are separated from the EC scenario, and are not discussed in this application. Alternatively, the EASDF may report to the SMF based on the conventional technology, and obtain the ECS option or the local DNS server address from the SMF. Subsequent steps are completely performed based on the conventional technology, and are not discussed in this application.

Step 407: The EASDF sends the DNS message to a DNS server. The corresponding DNS server may receive the DNS message.

Specifically, after the EASDF determines the ECS option or the local DNS server address, for the ECS option, the EASDF may add the determined ECS option to the DNS message (for example, the DNS query), and forward, to the DNS server, the DNS message to which the ECS option is added. If the EASDF determines the local DNS server address, the EASDF may send the DNS message to a local DNS server.

Step 408: The EASDF receives a DNS response from the DNS server, where the DNS response includes an FQDN or an IP address of the server.

In a possible implementation, the DNS response may include an EAS IP address.

Step 409: The EASDF determines, based on the DNS response, the session granularity DNS context, and the node-level DNS context, a handling action for the DNS message (that is, the DNS response).

In a possible implementation, the EASDF may determine, based on the rule ID and the first association relationship a, the handling action for the DNS message.

In another possible implementation, the EASDF may match the DNS message based on the rule ID and the first association relationship a, and determine the handling action for the DNS message.

For details, refer to step 311 in the method 300. Details are not described herein again.

Step 410: The EASDF sends a report message to the SMF, where the report message includes an FQDN or an EAS IP address corresponding to the DNS response.

After receiving the DNS response from the DNS server, the EASDF matches an FQDN or an EAS IP address range included in the DNS response. If the FQDN or the EAS IP address range included in the DNS response falls within the FQDN range or the EAS IP address range included in the first association relationship, the EASDF sends the DNS report message to the SMF, where the DNS report message includes the FQDN or the EAS IP address corresponding to the DNS response.

Step 411: The SMF inserts a UL CL or a BP.

Specifically, the SMF may insert the UL CL and a local UPF based on the FQDN or the EAS IP address included in the DNS report message.

Step 412: The SMF indicates the EASDF to forward the DNS response to the UE #1.

In a possible implementation, the SMF may indicate the EASDF to forward the DNS response to the UE #1.

Step 413: The EASDF forwards the DNS response to the UE #1, thereby completing local service discovery.

According to the method provided in this embodiment, the SMF sends, to the EASDF, a DNS handling information that identifies a message granularity of the DNS handling information, so that the EASDF may use different DNS handling information for different PDU sessions or UEs. This implements differentiated handling of DNS messages, and improves service experience of a user. In addition, the EASDF may determine the ECS option or the local DNS server address based on the node-level DNS context, thereby avoiding repeated sending of the ECS option, reducing signaling interaction, and improving information processing efficiency.

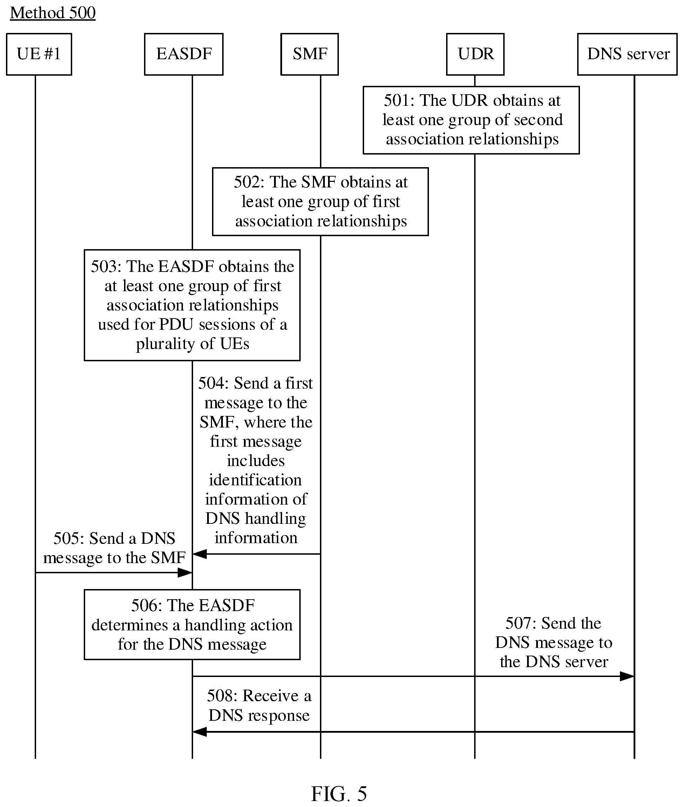

FIG. 5 is a schematic flowchart of a communication method 500 according to this application. The method in FIG. 5 includes the following steps.

For step 501, refer to the step 301 in the method 300. Details are not described again.

Step 502: An SMF obtains at least one group of first association relationships, where the first association relationship is a correspondence between identification information of domain name system DNS handling information and the DNS handling information.

In this application, the DNS handling information may include DNS detection information or a DNS handling parameter.

The first association relationship in this embodiment may be an association relationship between the identification information of the domain name system DNS handling information and the DNS handling information parameter.

This embodiment is described by using an example in which the identification information of the DNS handling information is a data network access identifier DNAI, and the DNS handling information parameter is an ECS option, or by using an example in which the identification information of the DNS handling information is a data network access identifier DNAI, and the DNS handling information parameter is a correspondence between an FQDN and an ECS option, or by using an example in which the identification information of the DNS handling information is a data network access identifier DNAI, and the DNS handling information parameter is a local DNS server, or by using an example in which the identification information of the DNS handling information is a data network access identifier DNAI, and the DNS handling information parameter is a correspondence between an FQDN and a local DNS server.

A function of the first association relationship in this embodiment is that the EASDF may subsequently determine the ECS option or the local DNS server address based on a DNS message and the first association relationship. Specifically, the EASDF may determine the ECS option or the local DNS server address by using a DNAI (and a requested FQDN) corresponding to UE, and does not need to send a DNS message to the SMF to request the ECS option.

In a possible implementation, the SMF may request deployment information of an EAS from a UDR, and then the UDR sends, to the SMF, the second association relationship, that is, an association relationship between a UE group ID and deployment information of an EAS.

In another possible implementation, the SMF may subscribe to a notification of the deployment information of the EAS, and when a notification condition is met, the UDR may send a notification message to the SMF, and send, to the SMF, the association relationship between the UE group ID and the deployment information of the EAS and/or the handling action for the DNS message.

Alternatively, when an event such as expiration of an internal timer of the SMF is triggered, the UDR may send, to the SMF, the association relationship between the UE group ID and the deployment information of the EAS.

In another possible implementation of this step, the UDR may further send, to the SMF, an association relationship between identification information of UE and the deployment information of the EAS and an association relationship between the identification information of the UE and a UE group ID separately through two messages. In this implementation, the SMF needs to determine an association relationship between the UE group ID and the deployment information of the EAS based on the two messages.

Specifically, in a possible implementation, the SMF may determine, based on the second association relationship (that is, the association relationship between the UE group ID and the deployment information of the EAS) and UPF deployment information, an association relationship between a DNAI and an ECS option, or an association relationship between a DNAI and {an FQDN and an ECS option}, or an association relationship between a DNAI and a local DNS server address, or an association relationship between a DNAI and {an FQDN and a local DNS server address}.

Step 503: The EASDF obtains at least one group of first association relationships used for PDU sessions of a plurality of UEs.

In this application, the EASDF may obtain at least one group of first association relationships used for the PDU sessions of a plurality of UEs, where "the plurality of UEs" may be understood as a plurality of or all of UEs to which the first association relationships are applicable. The plurality of PDU sessions may be understood as a plurality of or all of PDU sessions to which the first association relationships are applicable.

In a possible implementation, the at least one group of first association relationships used for the PDU sessions of the plurality of UEs may be preconfigured on the EASDF.

In another possible implementation, the SMF may send, to the EASDF, the at least one group of first association relationships used for the PDU sessions of the plurality of UEs.

In an example, an implementation of this step may be that the SMF sends a "node-level DNS context" create request to the EASDF, where the request includes the first association relationship. In another possible implementation, this step may alternatively be triggered when the SMF receives a PDU session establishment request, or in another manner. This is not limited herein.

Specifically, in a possible implementation, a "node-level DNS context" may include a "node-level DNS handling rule", and the "node-level DNS handling rule" may include at least one group of first association relationships. For example, the "node-level DNS handling rule" includes a correspondence between "a DNAI and an ECS option", or the "node-level DNS handling rule" includes a correspondence between "a DNAI and {an FQDN and an ECS option}", or the "node-level DNS handling rule" includes a correspondence between "a DNAI and a local DNS server address", or the "node-level DNS handling rule" includes a correspondence between "a DNAI and {an FQDN and a local DNS server address}".

In another possible implementation, the "node-level DNS context" may include an association relationship between the identification information of the DNS handling information and the "node-level DNS handling rule", and the "node-level DNS handling rule" may include the DNS handling parameter. For example, the "node-level DNS handling rule" includes the ECS option, and the "node-level DNS context" includes one or more groups of correspondences between DNAIs and ECS options. Alternatively, the "node-level DNS handling rule" includes a correspondence between "an FQDN and an ECS option", and the "node-level DNS context" includes one or more groups of correspondences between DNAIs, FQDNs, and ECS options. Alternatively, the "node-level DNS handling rule" includes a correspondence between local DNS server addresses, and the "node-level DNS context" includes one or more groups of correspondences between DNAIs and local DNS server addresses. Alternatively, the "node-level DNS handling rule" includes a correspondence between "an FQDN and a local DNS server address", and the "node-level DNS context" includes one or more groups of correspondence between DNAIs, FQDNs, and local DNS server addresses.

In this embodiment, information in this step may be sent by using a Neasdf_NodeLevelDNSHandlingRules_Create/Update or another message. This is not limited herein.

It should be noted that in this application, the step 501 to the step 503 are performed at a node granularity. The following steps 504 to 508 are performed at a session granularity.

Step 504: The SMF sends a first message to the EASDF, where the first message includes a first identifier.

It should be noted that, in this embodiment, the first identifier may be DNS handling information corresponding to first UE or the first PDU session.

For example, a first PDU session corresponds to a message #1 (which is an example of the first message), and the first message includes a DNAI (which is an example of the first identifier).

For example, the SMF may send a "session granularity DNS context" create request to the EASDF.

In a possible implementation, the request may include an IP address of UE #1, a DNN of a PDU session, and a "session granularity DNS handling rule". The "session granularity DNS handling rule" includes a DNAI. The DNAI is a DNAI corresponding to a location of UE associated with a PDU session.

In another possible implementation, the request includes an IP address of UE #1, a DNN of a PDU session, a "session granularity DNS handling rule", and a DNAI. In this case, the DNAI is not included in the "session granularity DNS handling rule", but is used as an information element in parallel with the IP address of the UE #1, the DNN of the PDU session, and the "session granularity DNS handling rule". The DNAI is sent by the SMF to the EASDF in this step.

In this application, information in this step may be sent by using a Neasdf_DNSContext_Create/Update Request or another message. This is not limited herein.

Optionally, indication information #1 (which is an example of first indication information) may be further sent in this step. A function of the indication information #1 is to indicate the EASDF to handle a DNS message based on the "node-level DNS handling rule" after the EASDF receives a DNS query sent by the UE #1 or receives a DNS response sent by a DNS server. Certainly, the foregoing logic may also be configured on the EASDF when the EASDF is delivered from a factory or when a network is deployed. In this case, the indication information #1 does not need to be sent.

Step 505: The UE #1 (which is an example of the first UE) sends a DNS query (which is an example of the DNS message) to the EASDF, where the DNS query includes an FQDN. Correspondingly, the EASDF receives the DNS query.

Step 506: The EASDF determines an ECS option or a local DNS server address of the UE #1 based on the DNS query, the session granularity DNS context, and the node-level DNS context.

In a possible implementation, the EASDF may determine the ECS option or the local DNS server address of the UE #1 based on the DNAI and the first association relationship.

In another possible implementation, the EASDF may match the DNS message based on the DNAI and the first association relationship, and determine the ECS option or the local DNS server address of the UE #1.

For example, after receiving the DNS query sent by the UE #1, the EASDF determines the ECS option or the local DNS server address based on the DNS query, the session granularity DNS context, and the node-level DNS context.

In an example, after receiving the DNS query sent by the UE #1, the EASDF may perform the following steps. (1) The EASDF may determine, based on the IP address of the UE #1 and/or the DNN of the PDU session and the session granularity DNS context, a DNAI corresponding to the UE #1. For example, the EASDF may determine a source (source) IP address of the DNS query sent by the UE #1 as the IP address of the UE #1. Because the session granularity DNS context already includes the IP address of the UE #1 and/or the DNN of the PDU session and the DNAI (it is assumed that a UE DNAI corresponding to the UE #1 is a DNAI #1), the EASDF may determine, based on the IP address of the UE #1, that a DNAI of the UE #1 is the DNAI #1. (2) The EASDF may determine, based on the DNAI (and the indication information #1, if the indication information #1 is included in the step 304, or the FQDN, if the FQDN is included in the association relationship) and the node-level DNS context, the ECS option or the local DNS server address. Because the node-level DNS context includes one or more groups of first association relationships, that is, association relationships between "DNAIs and (FQDNs) and ECS options" or association relationships between "DNAIs and (FQDNs) and local DNS server addresses", the ECS option or the local DNS server address may be determined based on the DNAI (and the FQDN included in the DNS query, if the FQDN is included in the association relationship).

The foregoing steps (1) and (2) may also be understood as that the EASDF performs matching on the first association relationship, to determine the ECS option or the local DNS server address. A scenario considered in this application is that the EASDF may successfully determine the ECS option or the local DNS server address, that is, a scenario in which the EASDF successfully matches the DNS message sent by the UE #1 with "an association relationship between a DNAI and an (FQDN) and an ECS option" or "an association relationship between a DNAI and an (FQDN) and a local DNS server address" included in the first association relationship sent by the SMF. It may also be understood as a scenario in which the EASDF may successfully determine the ECS option of the UE #1 or the local DNS server address of the UE #1. In this embodiment, "(FQDN)" means that the FQDN is optional.

When performing the step (2), the EASDF fails to determine the ECS option or the local DNS server address, the EASDF may not report to the SMF. Subsequent steps are separated from the EC scenario, and are not discussed in this application. Alternatively, the EASDF may report to the SMF based on the conventional technology, and request the ECS option. Subsequent steps are completely performed based on the conventional technology, and are not discussed in this application.

Step 507: The EASDF sends the DNS message to a DNS server. The corresponding DNS server may receive the DNS message.

Specifically, after the EASDF determines the ECS option or the local DNS server address, for the ECS option, the EASDF may add the determined ECS option to the DNS message (for example, the DNS query), and forward, to the DNS server, the DNS message to which the ECS option is added. If the EASDF determines the local DNS server address, the EASDF may send the DNS message to a local DNS server.

Step 508: The EASDF receives a DNS response from the DNS server, where the DNS response includes an FQDN or an IP address of the server.

In a possible implementation, the DNS response may include an EAS IP address.

Subsequently, the EASDF may match content of the DNS response, determine whether to send a report message to the SMF, and cache the DNS message. Once the EASDF sends the report message to the SMF, the SMF may insert a UL CL or a BP. Subsequently, the SMF may indicate the EASDF to forward the DNS response to the UE #1, and the EASDF forwards the DNS response to the UE #1, thereby completing local service discovery. Details are not described in this application again.

According to the method provided in this embodiment, the SMF sends, to the EASDF, the association relationship between the DNAI and the ECS option or the association relationship between the DNAI and the local DNS server address at a node granularity, so that EASDF may determine the ECS option or the local DNS server address based on the node-level DNS context. This avoids repeated sending of the ECS option, reduces signaling interaction, and improves information processing efficiency.

It should be noted that, to clearly describe the technical solutions in embodiments of this application, terms such as "first" and "second" are used in embodiments of this application to distinguish between same items or similar items that have basically same functions and purposes. For example, first information and second information are merely used to distinguish between different information, and do not limit sequences of the first information and the second information. A person skilled in the art may understand that the terms such as "first" and "second" do not limit a quantity or an execution sequence, and the terms such as "first" and "second" do not indicate a definite difference.

In embodiments of this application, "one or more of the following" or a similar expression thereof refers to any combination of these terms, including any combination of a single term or a plurality of terms. For example, one or more of a, b, or c may represent a, b, c; a and b; a and c; b and c; or a, b, and c, where a, b, and c each may be singular or plural.

It should be understood that, in this application, "when" and "if" mean that an apparatus performs corresponding processing in an objective situation, and are not intended to limit time. The terms do not mean that the apparatus is required to have a determining action during implementation, and do not mean any other limitation.

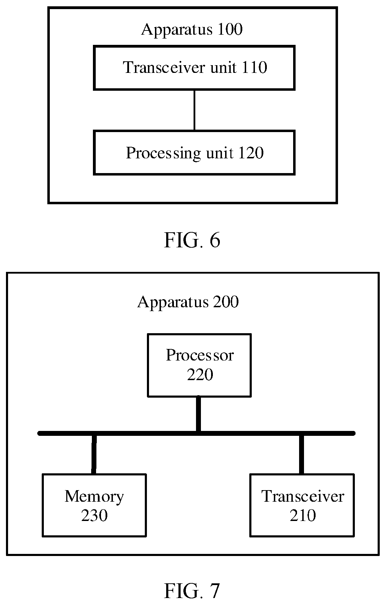

The foregoing describes in detail the communication method provided in embodiments of this application with reference to FIG. 2 to FIG. 5. The following describes an apparatus provided in an embodiment of this application with reference to FIG. 6 and FIG. 7. It should be understood that descriptions of apparatus embodiments correspond to descriptions of the method embodiments. Therefore, for content that is not described in detail, refer to the foregoing method embodiments. For brevity, details are not described herein again.

The foregoing mainly describes the solutions provided in embodiments of this application from a perspective of interaction between nodes. It may be understood that, to implement the foregoing functions, each node, for example, an SMF, an EASDF, or a UDR, includes a corresponding hardware structure and/or a corresponding software module for performing each function. A person skilled in the art should be able to be aware that, in combination with examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of a terminal device or the terminal device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, division into modules is an example, and is merely logical function division. During actual implementation, another division manner may be used. An example in which each functional module is obtained through division based on each corresponding function is used below for description.

FIG. 6 is a schematic block diagram of an apparatus 100 according to an embodiment of this application. As shown in the figure, the apparatus 100 may include a transceiver unit 110 and a processing unit 120.

In a possible design, the apparatus 100 may be the SMF in the foregoing method embodiments, or may be a chip configured to implement a function of the SMF in the foregoing method embodiments. It should be understood that the apparatus 100 may correspond to the SMF in the method 200, the method 300, the method 400, and the method 500 according to embodiments of this application, and the apparatus 100 may perform steps corresponding to the SMF in the method 200, the method 300, the method 400, and the method 500 in embodiments of this application. It should be understood that a specific process in which the units perform the foregoing corresponding steps is described in detail in the foregoing method embodiments. For brevity, details are not described herein again.

In a possible design, the apparatus 100 may be the EASDF in the foregoing method embodiments, or may be a chip configured to implement a function of the EASDF in the foregoing method embodiments. It should be understood that the apparatus 100 may correspond to the EASDF in the method 200, the method 300, the method 400, and the method 500 according to embodiments of this application, and the apparatus 100 may perform steps corresponding to the EASDF in the method 200, the method 300, the method 400, and the method 500 in embodiments of this application. It should be understood that a specific process in which the units perform the foregoing corresponding steps is described in detail in the foregoing method embodiments. For brevity, details are not described herein again.

In a possible design, the apparatus 100 may be the first network element in the foregoing method embodiments, for example, a UDR or a UDM, or may be a chip configured to implement a function of the first network element in the foregoing method embodiments. It should be understood that the apparatus 100 may correspond to the UDR in the method 300, the method 400, and the method 500 according to embodiments of this application, and the apparatus 100 may perform steps corresponding to the UDR in the method 200, the method 300, the method 400, and the method 500 in embodiments of this application. It should be understood that a specific process in which the units perform the foregoing corresponding steps is described in detail in the foregoing method embodiments. For brevity, details are not described herein again.

FIG. 7 is a schematic block diagram of an apparatus 200 according to an embodiment of this application. As shown in the figure, the apparatus 200 includes at least one processor 220. The processor 220 is coupled to a memory, and is configured to execute instructions stored in the memory, to send a signal and/or receive a signal. Optionally, the apparatus 200 further includes the memory 230 that is configured to store the instructions. Optionally, the apparatus 200 further includes a transceiver 210, and the processor 220 controls the transceiver 210 to send a signal and/or receive a signal.

It should be understood that the processor 220 and the memory 230 may be integrated into one processing apparatus. The processor 220 is configured to execute program code stored in the memory 230 to implement the foregoing functions. During specific implementation, the memory 230 may alternatively be integrated into the processor 220, or may be independent of the processor 220.

It should be further understood that the transceiver 210 may include a transceiver (or referred to as a receiver machine) and a transmitter (or referred to as a transmitter machine). The transceiver may further include an antenna. There may be one or more antennas. The transceiver 210 may be a communication interface or an interface circuit.

Specifically, the transceiver 210 in the apparatus 200 may correspond to the transceiver unit 110 in the apparatus 100, and the processor 220 in the apparatus 200 may correspond to the processing unit 120 in the apparatus 200.

It should be understood that a specific process in which the transceiver and the processor perform the foregoing corresponding steps is described in detail in the foregoing method embodiments. For brevity, details are not described herein again.

In a possible design, the apparatus 200 may be the SMF in the foregoing method embodiments. In a possible design, the apparatus 200 may be the EASDF in the foregoing method embodiments. In a possible design, the apparatus 200 may be the first network element in the foregoing method embodiments, for example, a UDR or a UDM.

In an implementation process, steps in the foregoing methods can be implemented by using a hardware integrated logical circuit in the processor, or by using instructions in a form of software. Steps of the methods disclosed with reference to embodiments of this application may be directly executed and accomplished by a hardware processor, or may be executed and accomplished by using a combination of hardware and a software module in the processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by a hardware decoding processor, or may be executed and accomplished by using a combination of hardware and a software module in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch-link DRAM, SLDRAM), and a direct rambus dynamic random access memory (direct ram-bus RAM, DR RAM). It should be noted that the memory of the systems and methods described in this specification includes but is not limited to these and any memory of another proper type.

According to the methods provided in embodiments of this application, this application further provides a computer program product. The computer program product stores computer program code. When the computer program code runs on a computer, the computer is enabled to perform the method in any one of the embodiments of the method 200, the method 300, the method 400, and the method 500.

According to the methods provided in embodiments of this application, this application further provides a computer-readable medium. The computer-readable medium stores program code. When the program code runs on a computer, the computer is enabled to perform the method in any one of the embodiments of the method 200, the method 300, the method 400, and the method 500.

According to the methods provided in embodiments of this application, this application further provides a system. The system includes the foregoing apparatus or device.

All or some of the foregoing embodiments may be implemented by using software, hardware, firmware, or any combination thereof. When software is used to implement the foregoing embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disc (solid state disc, SSD)), or the like.

A network side device and a terminal device in the foregoing apparatus embodiments correspond to a network side device or a terminal device in the method embodiments. A corresponding module or unit performs a corresponding step. For example, a communication unit (transceiver) performs a receiving step or a sending step in the method embodiments, and a step other than the sending step and the receiving step may be performed by a processing unit (processor). For a function of a specific unit, refer to a corresponding method embodiment. There may be one or more processors.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed by using various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A communication method, comprising:
obtaining, by a session management function, at least one group of first association relationships, wherein the first association relationship is a correspondence between identification information of domain name system DNS handling information and the DNS handling information;
sending, by the session management function to an edge application server discovery function, the at least one group of first association relationships used for protocol data unit PDU sessions of a plurality of terminal devices; and
sending, by the session management function to the edge application server discovery function, a first message corresponding to a first PDU session, wherein the first message comprises first identification information, the first identification information is identification information of DNS handling information corresponding to the first PDU session, and the first identification information is used for determining, based on the first identification information and the first association relationship, the DNS handling information corresponding to the first PDU session.

2. A communication method, comprising:
receiving, by an edge application server discovery function from a session management function, at least one group of first association relationships used for protocol data unit PDU sessions of a plurality of terminal devices, wherein the first association relationship is a correspondence between identification information of domain name system DNS handling information and the DNS handling information;
receiving, by the edge application server discovery function from the session management function, a first message corresponding to a first PDU session, wherein the first message comprises first identification information, and the first identification information is identification information of DNS handling information corresponding to the first PDU session; and
determining, by the edge application server discovery function based on the first identification information and the first association relationship, the DNS handling information corresponding to the first PDU session.

3. The method according to claim 1 or 2, wherein the identification information of the DNS handling information identifies the DNS handling information;
the DNS handling information comprises DNS detection information and/or a DNS handling parameter;
the DNS detection information comprises a fully qualified domain name FQDN range and/or an edge application server internet protocol address range; and
the DNS handling parameter comprises an EDNS client subnet option or a local DNS server address.

4. The method according to claim 3, wherein
the DNS detection information is used for matching a DNS message to determine a handling action for the DNS message.

5. The method according to claim 3 or 4, wherein the DNS handling information is the DNS detection information, and the method further comprises:
receiving, by the edge application server discovery function, a DNS message;
matching, by the edge application server discovery function, the DNS message based on the first identification information and the first association relationship; and
determining, by the edge application server discovery function, the handling action for the DNS message.

6. The method according to any one of claims 3 to 5, wherein the identification information of the DNS handling information is a data network access identifier DNAI.

7. The method according to claim 6, wherein the DNS handling information is the DNS handling parameter, and the DNS handling parameter is the EDNS client subnet option; and
the first identification information is a first DNAI, and the first identification information is used for matching the first association relationship to determine the EDNS client subnet option, wherein the first DNAI is a DNAI associated with a location of a terminal device.

8. The method according to claim 6, wherein the DNS handling information is the DNS handling parameter, and the DNS handling parameter is the local DNS server address; and
the first identification information is a first DNAI, and the first identification information is used for matching the first association relationship to determine the local DNS server address, wherein the first DNAI is a DNAI associated with a location of a terminal device.

9. The method according to claim 6, wherein the DNS handling information is the DNS handling parameter, the DNS handling parameter is the EDNS client subnet option, the first identification information is a first DNAI, and the method further comprises:
receiving, by the edge application server discovery function, a DNS message from a terminal device;
matching, by the edge application server discovery function, the first association relationship based on the first identification information;
determining, by the edge application server discovery function, the EDNS client subnet option by matching the first association relationship; and
adding, by the edge application server discovery function, the determined EDNS client subnet option to the DNS message, and sending the DNS message to a DNS server, wherein
the first DNAI is a DNAI associated with a location of the terminal device.

10. The method according to claim 6, wherein the DNS handling information is the DNS handling parameter, the DNS handling parameter is the local DNS server address, and the first identification information is a first DNAI, the method further comprises:
receiving, by the edge application server discovery function, a DNS message from a terminal device;
matching, by the edge application server discovery function, the first association relationship based on the first identification information;
determining, by the edge application server discovery function, the local DNS server address by matching the first association relationship; and
sending, by the edge application server discovery function, the DNS message to a local DNS server, wherein
the first DNAI is a DNAI associated with a location of the terminal device.

11. A computer-readable storage medium, wherein the storage medium stores instructions, and when the instructions are executed by a communication apparatus, the method according to any one of claims 1, and 3 to 8 is implemented, or the method according to any one of claims 2 to 10 is implemented.

12. A communication method, comprising:
obtaining, by the session management function, at least one group of first association relationships, wherein the first association relationship is a correspondence between identification information of domain name system DNS handling information and the DNS handling information;
sending, by the session management function, to the edge application server discovery function, the at least one group of first association relationships used for protocol data unit PDU sessions of a plurality of terminal devices;
receiving, by the edge application server discovery function, from the session management function, the at least one group of first association relationships used for the protocol data unit PDU sessions of the plurality of terminal devices;
sending, by the session management function, to the edge application server discovery function, a first message corresponding to a first PDU session, wherein the first message comprises first identification information, and the first identification information is identification information of DNS handling information corresponding to the first PDU session;
receiving, by the edge application server discovery function, from the session management function, the first message corresponding to the first PDU session; and
determining, by the edge application server discovery function, based on the first identification information and the first association relationship, the DNS handling information corresponding to the first PDU session.

13. A communication apparatus, comprising one or more functional units, configured to enable the communication apparatus to perform the communication method according to any one of claims 1, and 3 to 8.

14. A communication apparatus, comprising one or more functional units, configured to enable the communication apparatus to perform the communication method according to any one of claims 2 to 10.

15. A communication system, comprising the apparatus according to claim 13 and the apparatus according to claim 14.

## Patentansprüche

1. Kommunikationsverfahren, umfassend:
Kommunikationsverfahren, umfassend: Erhalten, durch eine Sitzungsverwaltungsfunktion, mindestens einer Gruppe von ersten Zuordnungsbeziehungen, wobei jede erste Zuordnungsbeziehung eine Entsprechung zwischen Identifikationsinformationen von DNS-Handhabungsinformationen des Domain-Name-Systems und den DNS-Handhabungsinformationen darstellt;
Senden, durch die Sitzungsverwaltungsfunktion, der mindestens einen Gruppe von ersten Zuordnungsbeziehungen, die für Protokolldateneinheit- (PDU-)Sitzungen einer Vielzahl von Endgeräten verwendet werden, an eine Edge-Anwendungsserver-Erkennungsfunktion; und
Senden, durch die Sitzungsverwaltungsfunktion, einer ersten Nachricht, die einer ersten PDU-Sitzung entspricht, an die Edge-Anwendungsserver-Erkennungsfunktion, wobei die erste Nachricht erste Identifikationsinformationen umfasst, wobei es sich bei den ersten Identifikationsinformationen um Identifikationsinformationen von DNS-Handhabungsinformationen handelt, die der ersten PDU-Sitzung zugeordnet sind, und wobei die ersten Identifikationsinformationen verwendet werden, um basierend auf den ersten Identifikationsinformationen und der ersten Zuordnungsbeziehung die DNS-Handhabungsinformationen zu bestimmen, die der ersten PDU-Sitzung entsprechen.

2. Kommunikationsverfahren, umfassend:
Empfangen, durch eine Edge-Anwendungsserver-Erkennungsfunktion, mindestens einer Gruppe von ersten Zuordnungsbeziehungen von einer Sitzungsverwaltungsfunktion, wobei die Zuordnungsbeziehungen für Protokolldateneinheit- (PDU-)Sitzungen einer Vielzahl von Endgeräten verwendet werden und wobei jede erste Zuordnungsbeziehung eine Entsprechung zwischen Identifikationsinformationen von DNS-Handhabungsinformationen des Domain-Name-Systems und den DNS-Handhabungsinformationen darstellt;
Empfangen, durch die Edge-Anwendungsserver-Erkennungsfunktion, einer ersten Nachricht, die einer ersten PDU-Sitzung entspricht, von der Sitzungsverwaltungsfunktion, wobei die erste Nachricht erste Identifikationsinformationen umfasst, wobei es sich bei den ersten Identifikationsinformationen um Identifikationsinformationen von DNS-Handhabungsinformationen handelt, die der ersten PDU-Sitzung zugeordnet sind; und
Bestimmen, durch die Edge-Anwendungsserver-Erkennungsfunktion, der DNS-Handhabungsinformationen, die der ersten PDU-Sitzung entsprechen, basierend auf den ersten Identifikationsinformationen und der ersten Zuordnungsbeziehung.

3. Verfahren nach Anspruch 1 oder 2, wobei die Identifikationsinformationen der DNS-Handhabungsinformationen die DNS-Handhabungsinformationen identifizieren;
Wobei die DNS-Handhabungsinformationen DNS-Erkennungsinformationen und/oder einen DNS-Handhabungsparameter umfassen;
wobei die DNS-Erkennungsinformationen einen Bereich vollqualifizierter Domänennamen (FQDN) und/oder einen Internetprotokoll-Adressbereich eines Edge-Anwendungsservers umfassen; und
wobei der DNS-Handhabungsparameter eine EDNS-Client-Subnetzoption oder eine lokale DNS-Serveradresse umfasst.

4. Verfahren nach Anspruch 3, wobei
die DNS-Erkennungsinformationen zum Abgleich einer DNS-Nachricht verwendet werden, um eine Handhabungsaktion für die DNS-Nachricht zu bestimmen.

5. Verfahren nach Anspruch 3 oder 4, wobei die DNS-Handhabungsinformationen die DNS-Erkennungsinformationen sind, und das Verfahren ferner umfasst:
Empfangen einer DNS-Nachricht durch die Edge-Anwendungsserver-Erkennungsfunktion;
Abgleichen der DNS-Nachricht durch die Edge-Anwendungsserver-Erkennungsfunktion basierend auf den ersten Identifikationsinformationen und der ersten Zuordnungsbeziehung; und
Bestimmen der Handhabungsaktion für die DNS-Nachricht durch die Edge-Anwendungsserver-Erkennungsfunktion.

6. Verfahren nach einem der Ansprüche 3 bis 5, wobei die Identifikationsinformation der DNS-Handhabungsinformationen eine Datennetzzugangskennung (DNAI) ist.

7. Verfahren nach Anspruch 6, wobei die DNS-Handhabungsinformationen der DNS-Handhabungsparameter sind und der DNS-Handhabungsparameter die EDNS-Client-Subnetzoption ist; und
wobei die erste Identifikationsinformation eine erste DNAI ist und zum Abgleichen der ersten Zuordnungsbeziehung verwendet wird, um die EDNS-Client-Subnetzoption zu bestimmen, wobei die erste DNAI eine DNAI ist, die mit einem Standort eines Endgeräts verknüpft ist.

8. Verfahren nach Anspruch 6, wobei die DNS-Handhabungsinformationen der DNS-Handhabungsparameter sind und der DNS-Handhabungsparameter die lokale DNS-Serveradresse ist; und
wobei die erste Identifikationsinformation eine erste DNAI ist und die erste Identifikationsinformation zum Abgleichen der ersten Zuordnungsbeziehung verwendet wird, um die lokale DNS-Serveradresse zu bestimmen, wobei die erste DNAI eine DNAI ist, die mit einem Standort eines Endgeräts verknüpft ist.

9. Verfahren nach Anspruch 6, wobei die DNS-Handhabungsinformationen der DNS-Handhabungsparameter sind, der DNS-Handhabungsparameter die EDNS-Client-Subnetzoption ist, die ersten Identifikationsinformationen eine erste DNAI sind, und das Verfahren ferner umfasst:
Empfangen einer DNS-Nachricht von einem Endgerät durch die Edge-Anwendungsserver-Erkennungsfunktion;
Abgleichen der ersten Zuordnungsbeziehung durch die Edge-Anwendungsserver-Erkennungsfunktion basierend auf den ersten Identifikationsinformationen;
Bestimmen der EDNS-Client-Subnetzoption durch die Edge-Anwendungsserver-Erkennungsfunktion durch Abgleichen der ersten Zuordnungsbeziehung; und
Hinzufügen der bestimmten EDNS-Client-Subnetzoption zur DNS-Nachricht durch die Edge-Anwendungsserver-Erkennungsfunktion und Senden der DNS-Nachricht an einen DNS-Server, wobei
die erste DNAI eine DNAI ist, die mit einem Standort des Endgeräts verknüpft ist.

10. Verfahren nach Anspruch 6, wobei die DNS-Handhabungsinformationen der DNS-Handhabungsparameter sind, der DNS-Handhabungsparameter die lokale DNS-Serveradresse ist, und die ersten Identifikationsinformationen eine erste DNAI sind, wobei das Verfahren ferner umfasst:
Empfangen einer DNS-Nachricht von einem Endgerät durch die Edge-Anwendungsserver-Erkennungsfunktion;
Abgleichen der ersten Zuordnungsbeziehung durch die Edge-Anwendungsserver-Erkennungsfunktion basierend auf den ersten Identifikationsinformationen;
Bestimmen der lokalen DNS-Serveradresse durch die Edge-Anwendungsserver-Erkennungsfunktion durch Abgleichen der ersten Zuordnungsbeziehung; und
Senden der DNS-Nachricht durch die Edge-Anwendungsserver-Erkennungsfunktion an einen lokalen DNS-Server, wobei die erste DNAI eine DNAI ist, die mit einem Standort des Endgeräts verknüpft ist.

11. Ein computerlesbares Speichermedium, wobei das Speichermedium Anweisungen speichert und wenn die Anweisungen von einer Kommunikationsvorrichtung ausgeführt werden, das Verfahren gemäß einem der Ansprüche 1 und 3 bis 8 oder das Verfahren gemäß einem der Ansprüche 2 bis 10 ausgeführt wird.

12. Kommunikationsverfahren, umfassend:
Empfangen, durch die Sitzungsverwaltungsfunktion, von mindestens einer Gruppe von ersten Zuordnungsbeziehungen, wobei die erste Zuordnungsbeziehung eine Entsprechung zwischen Identifikationsinformationen von DNS-Handhabungsinformationen des Domain Name Systems und den DNS-Handhabungsinformationen ist;
Senden der mindestens einen Gruppe von ersten Zuordnungsbeziehungen, die für Protokolldateneinheit-PDU-Sitzungen einer Vielzahl von Endgeräten verwendet wird, durch die Sitzungsverwaltungsfunktion an eine Edge-Anwendungsserver-Erkennungsfunktion;
Empfangen der mindestens einen Gruppe von ersten Zuordnungsbeziehungen durch die Edge-Anwendungsserver-Erkennungsfunktion von der Sitzungsverwaltungsfunktion, wobei die erste Zuordnungsbeziehung für die PDU-Sitzungen der Vielzahl von Endgeräten verwendet wird;
Senden, durch die Sitzungsverwaltungsfunktion, einer ersten Nachricht, die einer ersten PDU-Sitzung entspricht, an die Edge-Anwendungsserver-Erkennungsfunktion, wobei die erste Nachricht erste Identifikationsinformationen umfasst, wobei es sich bei den ersten Identifikationsinformationen um Identifikationsinformationen von DNS-Handhabungsinformationen handelt, die der ersten PDU-Sitzung entsprechen;
Empfangen der ersten Nachricht, die der ersten PDU-Sitzung entspricht, durch die Edge-Anwendungsserver-Erkennungsfunktion von der Sitzungsverwaltungsfunktion; und
Bestimmen der DNS-Handhabungsinformationen, die der ersten PDU-Sitzung entsprechen, durch die Edge-Anwendungsserver-Erkennungsfunktion basierend auf den ersten Identifikationsinformationen und der ersten Zuordnungsbeziehung.

13. Kommunikationsvorrichtung, die eine oder mehrere Funktionseinheiten umfasst, die so konfiguriert sind, dass sie die Durchführung des Kommunikationsverfahrens nach einem der Ansprüche 1 und 3 bis 8 ermöglichen.

14. Kommunikationsvorrichtung, die eine oder mehrere Funktionseinheiten umfasst, die so konfiguriert sind, dass sie die Durchführung des Kommunikationsverfahrens nach einem der Ansprüche 2 bis 10 ermöglichen.

15. Kommunikationssystem, umfassend die Kommunikationsvorrichtung nach Anspruch 13 und die Kommunikationsvorrichtung nach Anspruch 14.

## Revendications

1. Procédé de communication, comprenant :
l'obtention, par une fonction de gestion de session, d'au moins un groupe de premières relations d'association, dans lequel la première relation d'association est une correspondance entre des informations d'identification d'informations de gestion de système de noms de domaine, DNS, et les informations de gestion DNS ;
l'envoi, par la fonction de gestion de session à une fonction de découverte de serveur d'application de périphérie, de l'au moins un groupe de premières relations d'association utilisées pour des sessions d'unité de données de protocole, PDU, d'une pluralité de dispositifs terminaux ; et
l'envoi, par la fonction de gestion de session à la fonction de découverte de serveur d'application de périphérie, d'un premier message correspondant à une première session PDU, dans lequel le premier message comprend des premières informations d'identification, les premières informations d'identification sont des informations d'identification d'informations de gestion DNS correspondant à la première session PDU, et les premières informations d'identification sont utilisées pour déterminer, sur la base des premières informations d'identification et de la première relation d'association, les informations de gestion DNS correspondant à la première session PDU.

2. Procédé de communication, comprenant :
la réception, par une fonction de découverte de serveur d'application de périphérie à partir d'une fonction de gestion de session, d'au moins un groupe de premières relations d'association utilisées pour des sessions d'unité de données de protocole, PDU, d'une pluralité de dispositifs terminaux, dans lequel la première relation d'association est une correspondance entre des informations d'identification d'informations de gestion de système de noms de domaine, DNS, et les informations de gestion DNS ;
la réception, par la fonction de découverte de serveur d'application de périphérie à partir de la fonction de gestion de session, d'un premier message correspondant à une première session PDU, dans lequel le premier message comprend des premières informations d'identification, et les premières informations d'identification sont des informations d'identification d'informations de gestion DNS correspondant à la première session PDU ; et
la détermination, par la fonction de découverte de serveur d'application de périphérie sur la base des premières informations d'identification et de la première relation d'association, des informations de gestion DNS correspondant à la première session PDU.

3. Procédé selon la revendication 1 ou 2, dans lequel les informations d'identification des informations de gestion DNS identifient les informations de gestion DNS ;
les informations de gestion DNS comprennent des informations de détection DNS et/ou un paramètre de gestion DNS ;
les informations de détection DNS comprennent une plage de noms de domaine entièrement qualifiés, FQDN, et/ou une plage d'adresses de protocole Internet de serveur d'application de périphérie ; et
le paramètre de gestion DNS comprend une option de sous-réseau client EDNS ou une adresse de serveur DNS local.

4. Procédé selon la revendication 3, dans lequel
les informations de détection DNS sont utilisées pour faire correspondre un message DNS pour déterminer une action de gestion pour le message DNS.

5. Procédé selon la revendication 3 ou 4, dans lequel les informations de gestion DNS sont les informations de détection DNS, et le procédé comprend également :
la réception, par la fonction de découverte de serveur d'application de périphérie, d'un message DNS ;
la mise en correspondance, par la fonction de découverte de serveur d'application de périphérie, du message DNS sur la base des premières informations d'identification et de la première relation d'association ; et
la détermination, par la fonction de découverte de serveur d'application de périphérie, de l'action de gestion pour le message DNS.

6. Procédé selon l'une quelconque des revendications 3 à 5, dans lequel les informations d'identification des informations de gestion DNS sont un identifiant d'accès au réseau de données, DNAI.

7. Procédé selon la revendication 6, dans lequel les informations de gestion DNS sont le paramètre de gestion DNS, et le paramètre de gestion DNS est l'option de sous-réseau client EDNS ; et
les premières informations d'identification sont un premier DNAI, et les premières informations d'identification sont utilisées pour faire correspondre la première relation d'association pour déterminer l'option de sous-réseau client EDNS, dans lequel le premier DNAI est un DNAI associé à un emplacement d'un dispositif terminal.

8. Procédé selon la revendication 6, dans lequel les informations de gestion DNS sont le paramètre de gestion DNS, et le paramètre de gestion DNS est l'adresse de serveur DNS local ; et
les premières informations d'identification sont un premier DNAI, et les premières informations d'identification sont utilisées pour faire correspondre la première relation d'association pour déterminer l'adresse de serveur DNS local, dans lequel le premier DNAI est un DNAI associé à un emplacement d'un dispositif terminal.

9. Procédé selon la revendication 6, dans lequel les informations de gestion DNS sont le paramètre de gestion DNS, le paramètre de gestion DNS est l'option de sous-réseau client EDNS, les premières informations d'identification sont un premier DNAI, et le procédé comprend également :
la réception, par la fonction de découverte de serveur d'application de périphérie, d'un message DNS à partir d'un dispositif terminal ;
la mise en correspondance, par la fonction de découverte de serveur d'application de périphérie, de la première relation d'association sur la base des premières informations d'identification ;
la détermination, par la fonction de découverte de serveur d'application de périphérie, de l'option de sous-réseau client EDNS en faisant correspondre la première relation d'association ; et
l'ajout, par la fonction de découverte de serveur d'application de périphérie, de l'option de sous-réseau client EDNS déterminée au message DNS, et l'envoi du message DNS à un serveur DNS, dans lequel
le premier DNAI est un DNAI associé à un emplacement du dispositif terminal.

10. Procédé selon la revendication 6, dans lequel les informations de gestion DNS sont le paramètre de gestion DNS, le paramètre de gestion DNS est l'adresse de serveur DNS local, les premières informations d'identification sont un premier DNAI, le procédé comprend également :
la réception, par la fonction de découverte de serveur d'application de périphérie, d'un message DNS à partir d'un dispositif terminal ;
la mise en correspondance, par la fonction de découverte de serveur d'application de périphérie, de la première relation d'association sur la base des premières informations d'identification ;
la détermination, par la fonction de découverte de serveur d'application de périphérie, de l'adresse de serveur DNS local en faisant correspondre la première relation d'association ; et
l'envoi, par la fonction de découverte de serveur d'application de périphérie, du message DNS à un serveur DNS local, dans lequel le premier DNAI est un DNAI associé à un emplacement du dispositif terminal.

11. Support de stockage lisible par ordinateur, dans lequel le support de stockage stocke des instructions, et lorsque les instructions sont exécutées par un appareil de communication, le procédé selon l'une quelconque des revendications 1, et 3 à 8 est mis en œuvre, ou le procédé selon l'une quelconque des revendications 2 à 10 est mis en œuvre.

12. Procédé de communication, comprenant :
l'obtention, par la fonction de gestion de session, d'au moins un groupe de premières relations d'association, dans lequel la première relation d'association est une correspondance entre des informations d'identification d'informations de gestion de système de noms de domaine, DNS, et les informations de gestion DNS ;
l'envoi, par la fonction de gestion de session, à une fonction de découverte de serveur d'application de périphérie, de l'au moins un groupe de premières relations d'association utilisées pour des sessions d'unité de données de protocole, PDU, d'une pluralité de dispositifs terminaux ;
la réception, par la fonction de découverte de serveur d'application de périphérie, à partir de la fonction de gestion de session, de l'au moins un groupe de premières relations d'association utilisées pour les sessions d'unité de données de protocole, PDU, de la pluralité de dispositifs terminaux ;
l'envoi, par la fonction de gestion de session, à la fonction de découverte de serveur d'application de périphérie, d'un premier message correspondant à une première session PDU, dans lequel le premier message comprend des premières informations d'identification, et les premières informations d'identification sont des informations d'identification d'informations de gestion DNS correspondant à la première session PDU ;
la réception, par la fonction de découverte de serveur d'application de périphérie, à partir de la fonction de gestion de session, du premier message correspondant à la première session PDU ; et
la détermination, par la fonction de découverte de serveur d'application de périphérie, sur la base des premières informations d'identification et de la première relation d'association, des informations de gestion DNS correspondant à la première session PDU.

13. Appareil de communication, comprenant une ou plusieurs unités fonctionnelles, configuré pour activer l'appareil de communication pour qu'il réalise le procédé de communication selon l'une quelconque des revendications 1, et 3 à 8.

14. Appareil de communication, comprenant une ou plusieurs unités fonctionnelles, configuré pour activer l'appareil de communication pour qu'il réalise le procédé de communication selon l'une quelconque des revendications 2 à 10.

15. Système de communication, comprenant l'appareil selon la revendication 13 et l'appareil selon la revendication 14.
